# EUROPÄISCHE PATENTSCHRIFT

(11) **EP 1 773 538 B1**
(45) Veröffentlichungstag und Bekanntmachung des Hinweises auf die Patenterteilung: **07.03.2012**
(21) Anmeldenummer: 05764383.5
(22) Anmeldetag: 23.07.2005
(51) Int. Cl.: B23Q 3/155, B23Q 7/14, B23B 27/00, B23C 5/00, B23D 77/00, B23D 77/02, B23Q 3/157, B23C 5/10, B23Q 7/04, B23B 31/11

(54) **WERKZEUGWECHSELEINRICHTUNG**
TOOL CHANGING DEVICE
DISPOSITIF DE CHANGEMENT D'OUTIL

(30) Priorität: 24.07.2004 DE 102004036052
(43) Veröffentlichungstag der Anmeldung: 18.04.2007
(73) Patentinhaber: MAPAL Fabrik für Präzisionswerkzeuge Dr. Kress KG, D-73431 Aalen (DE)
(72) Erfinder: KRESS, Dieter, 73431 Aalen (DE); HÄBERLE, Friedrich, 73466 Lauchheim (DE)
(74) Vertreter: Gleiss, Alf-Olav
(86) Internationale Anmeldenummer: PCT/EP2005/008060
(87) Internationale Veröffentlichungsnummer: WO 2006/010576

(56) Entgegenhaltungen:
- EP-A- 1 004 393
- EP-A- 1 004 393
- EP-A- 1 044 759
- EP-A- 1 044 759
- EP-A2- 0 324 909
- DD-A1- 237 807
- DD-A1- 237 807
- DE-A1- 4 312 563
- DE-A1- 4 325 999
- JP-A- 9 057 518
- JP-A- 2003 251 540
- US-A- 4 587 716
- US-A- 4 587 716
- US-A- 5 810 517
- US-A1- 2004 130 106
- PATENT ABSTRACTS OF JAPAN Bd. 007, Nr. 215 (M-244), 22. September 1983 (1983-09-22) & JP 58 109241 A (IKEGAI TEKKO KK), 29. Juni 1983 (1983-06-29)
- PATENT ABSTRACTS OF JAPAN Bd. 007, Nr. 227 (M-248), 7. Oktober 1983 (1983-10-07) & JP 58 120442 A (IKEGAI TEKKO KK), 18. Juli 1983 (1983-07-18)
- "A MULTI-POSITION GRIPPER FOR AN ASSEMBLY CELL ROBOT" SOVIET ENGINEERING RESEARCH, PRA, MELTON MOWBRAY, GB, Bd. 9, Nr. 12, Januar 1989 (1989-01), Seite 120, XP000205642 ISSN: 0144-6622
- PATENT ABSTRACTS OF JAPAN Bd. 1996, Nr. 11, 29. November 1996 (1996-11-29) & JP 08 187640 A (MITSUBISHI HEAVY IND LTD), 23. Juli 1996 (1996-07-23)
- PATENT ABSTRACTS OF JAPAN Bd. 007, Nr. 215 (M-244), 22. September 1983 (1983-09-22) & JP 58 109241 A (IKEGAI TEKKO KK), 29. Juni 1983 (1983-06-29)
- PATENT ABSTRACTS OF JAPAN Bd. 007, Nr. 227 (M-248), 7. Oktober 1983 (1983-10-07) & JP 58 120442 A (IKEGAI TEKKO KK), 18. Juli 1983 (1983-07-18)
- "A MULTI-POSITION GRIPPER FOR AN ASSEMBLY CELL ROBOT" SOVIET ENGINEERING RESEARCH, PRA, MELTON MOWBRAY, GB, Bd. 9, Nr. 12, Januar 1989 (1989-01), Seite 120, XP000205642 ISSN: 0144-6622
- PATENT ABSTRACTS OF JAPAN Bd. 1996, Nr. 11, 29. November 1996 (1996-11-29) & JP 08 187640 A (MITSUBISHI HEAVY IND LTD), 23. Juli 1996 (1996-07-23)

## Beschreibung

Die Erfindung betrifft ein Verfahren zum Wechseln mindestens eines Werkzeugs gemäß Oberbegriff des Anspruchs 1, eine Werkzeugwechseleinrichtung gemäß Oberbegriff des Anspruchs 8, sowie ein Werkzeug gemäß Oberbegriff des Anspruchs 15. Die Erfindung betrifft schließlich auch eine Werkzeugmaschine gemäß Oberbegriff des Anspruchs 22.

Werkzeugwechseleinrichtungen und Verfahren (vgl. EP 1 004 393 A2 und US 4,587,716 A) sowie Werkzeuge (vgl. JP 2003-251540 A) der hier angesprochenen Art sind bekannt. Sie dienen dazu, bei der Bearbeitung von Werkstücken unterschiedliche Werkzeuge einsetzen und/oder verschlissene Werkzeuge austauschen zu können. Ein Werkzeugwechsel erfolgt bei eine einzige Werkzeugspindel aufweisenden Werkzeugmaschinen (vgl. EP 1 004 393 A2) automatisch oder manuell, wobei jeweils das gesamte Werkzeug ausgetauscht werden muss. Bei einem Werkzeugwechsel muss sowohl für das auszutauschende als auch für das ausgetauschte Werkzeug Platz bereitgestellt werden. Werden die Werkzeuge in Magazinen untergebracht, muss für jedes Werkzeug ein eigener Platz vorhanden sein. Es ist ohne weiteres ersichtlich, dass sich insgesamt ein großer Platzbedarf ergibt.

Es gibt auch Werkzeugmaschinen mit mehreren in separaten Spindeln aufgenommenen Werkzeugen, die beispielsweise als Mehrspindelkopf oder Sonderbearbeitungsmaschine ausgelegt sind. Ein Werkzeugtausch muss hier manuell vorgenommen werden, was teuer und zeitaufwändig ist. Auch hier zeigt sich, dass für jedes Werkzeug Platz vorhanden sein muss, so dass der Platzbedarf auch bei derartigen Werkzeugmaschinen groß ist. Bei eine Anzahl von Bearbeitungsstationen aufweisenden Fertigungs- oder Transferlinien ist ein Werkzeugwechsel ebenfalls teuer und zeitaufwändig, weil hier nur ein manueller Werkzeugtausch möglich ist oder aber der Einsatz komplizierter Wechseleinrichtungen, die die Werkzeuge in den Bearbeitungsstationen austauschen.

Aufgabe der Erfindung ist es daher, ein Verfahren zum Wechseln mindestens eines Werkzeugs bereitzustellen, bei dem die genannten Nachteile vermieden werden.

Zur Lösung dieser Aufgabe wird ein Verfahren vorgeschlagen, das die in Anspruch 1 aufgeführten Merkmale aufweist. Zum Wechseln des mindestens einen Werkzeugs wird eine Wechselvorrichtung von einer Werkstückaufnahme einer Werkzeugmaschine wie ein Werkstück erfasst, bereitgestellt und in den Arbeitsbereich einer Werkzeugmaschine wie ein Werkstück gebracht, oder die Werkzeugmaschine wird zur Wechselvorrichtung wie zu einem Werkstück verlagert. Es wird eine Relativbewegung zwischen Werkzeugmaschine und Wechselvorrichtung durchgeführt. Das zu tauschende Werkzeug wird in einen Aufnahmebereich im Grundkörper der Wechselvorrichtung eingeführt und dort abgelegt. Ein neues Werkstück wird mittels einer Wechselvorrichtung bereitgestellt. Das neue Werkzeug wird erfasst. Wesentlich ist, dass zur Durchführung des Werkzeugwechsels ausschließlich für die Bearbeitung von Werkstücken erforderliche Freiheitsgrade beziehungsweise Bewegungen der Werkzeugmaschine ausgenutzt werden, die in der Lage ist, ein Werkzeug mit einem Werkstück in Eingriff zu bringen, um eine Bearbeitung vorzunehmen. Der Werkzeugwechsel erfolgt also im Wesentlichen folgendermaßen: Ist ein Werkzeug einer Werkzeugmaschine durch Bearbeitung eines Werkstücks verschlissen oder beschädigt, wird anstelle eines Werkstücks die Wechselvorrichtung der Werkzeugmaschine zugeführt, um das verschlissene Werkzeug aufzunehmen. Die Werkzeugmaschine fährt anstelle eines Werkstücks die Wechselvorrichtung an, um das verschlissene Werkzeug dort abzulegen. Damit ist es möglich, das verschlissene Werkzeug automatisch auszubauen. Nun wird der Werkzeugmaschine eine weitere Wechselvorrichtung anstelle eines Werkstücks zugeführt, die einen Aufnahmebereich für ein neues Werkzeug aufweist und dieses für die Werkzeugmaschine bereitstellt Diese fährt die Wechselvorrichtung an und nimmt das neue Werkzeug auf. Dadurch wird es möglich, ein verschlissenes gegen ein neues Werkzeug auszutauschen oder aber Werkzeuge verschiedener Art zu wechseln.

Weitere Ausführungsformen des Verfahrens ergeben sich aus den Unteransprüchen.

Aufgabe der Erfindung ist es auch, eine Werkzeugwechseleinrichtung zu schaffen, welche die genannten Nachteile vermeidet.

Zur Lösung dieser Aufgabe wird eine Werkzeugwechseleinrichtung geschaffen, die die in Anspruch 8 genannten Merkmale aufweist. Sie dient dazu, mindestens ein eine Kopplungsstelle aufweisendes Werkzeug auszutauschen und weist eine auch als Werkstück-Dummy bezeichnete Wechselvorrichtung mit mindestens einem Aufnahmebereich für ein Werkzeug auf. Die Wechselvorrichtung ist anstelle eines Werkstücks einsetzbar. Sie weist mindestens eine Eingriffseinrichtung zur drehfesten Erfassung des mindestens einen Werkzeugs, eine Kupplung sowie eine Rastvorrichtung auf, wobei die um eine Achse drehbare Eingriffseinrichtung mit der Kupplung gekoppelt ist. Dabei ermöglicht die Rastvorrichtung die freie Drehbarkeit der Eingriffseinrichtung um eine Achse in eine Richtung und verhindert diese in entgegengesetzter Richtung. Möglich ist es auch, eine Wechselvorrichtung mit mehreren Aufnahmebereichen auszustatten, von denen einer ein verschlissenes Werkzeug aufnimmt und ein anderer ein neues Werkzeug zur Verfügung stellt. Die Wechselvorrichtung kann auch Werkzeuge unterschiedlicher Art aufnehmen und der Werkzeugmaschine zur Verfügung stellen, so dass verschiedene Bearbeitungsschritte unter Verwendung unterschiedlicher Werkzeuge mit ein und derselben Werkzeugmaschine durchführbar sind. Auch hier wird die Wechselvorrichtung anstelle eines Werkstücks in den Bearbeitungsbereich der Werkzeugmaschine gebracht, so dass diese automatisch einen Werkzeugwechsel vornehmen kann. Es wird deutlich, dass die Wechselvorrichtung bei Werkzeugmaschinen mit einer oder mehreren Spindeln verwendbar ist, also beispielsweise bei Mehrspindelköpfen oder Sonderbearbeitungsmaschinen, die eine Anzahl von Spindeln aufweisen.

Bei den Erläuterungen zur Werkzeugwechseleinrichtung wurde hier davon ausgegangen, dass die Werkzeugmaschine die Wechselvorrichtung anfährt. Es ist aber auch möglich, dass die Wechselvorrichtung zur Werkzeugmaschine bewegt wird, um den Werkzeugwechsel durchzuführen.

Besonders bevorzugt wird ein Ausführungsbeispiel der Werkzeugwechseleinrichtung, bei der eine Wechselvorrichtung mit mehreren Aufnahmebereichen für Werkzeuge vorgesehen ist, deren Anordnung der Anordnung von Werkzeugen in einem Mehrspindelkopf entspricht oder der Anordnung von Werkzeugen in einer Sonderbearbeitungsmaschine. Bei dieser Ausgestaltung ist es möglich, eine Anzahl von Werkzeugen oder alle Werkzeuge gleichzeitig auszutauschen.

Weitere Ausgestaltungen der Werkzeugwechseleinrichtung ergeben sich aus den übrigen Unteransprüchen.

Aufgabe der Erfindung ist es außerdem, ein Werkzeug zur Verwendung in einer Werkzeugwechseleinrichtung oder bei einem Verfahren der oben angesprochenen Art vorzuschlagen, das einen automatischen Werkzeugwechsel ermöglicht.

Zur Lösung dieser Aufgabe wird ein Werkzeug vorgeschlagen, das die in Anspruch 15 genannten Merkmale aufweist. Es zeichnet sich dadurch aus, dass eine Zentrierhilfe - in Eindringrichtung eines Gewindeansatzes in ein zugehöriges Innengewinde gesehen - vor dem Gewindeansatz angeordnet ist, und dass ein Montageabschnitt zur drehfesten Kopplung mit einer Eingriffseinrichtung einer Wechselvorrichtung einer Werkzeugwechseleinrichtung gemäß einem der Ansprüche 8 bis 14 vorgesehen ist. Damit ist ein automatischer Wechsel, insbesondere mit Hilfe einer Werkzeugwechseleinrichtung der hier angesprochenen Art möglich.

Weitere Ausgestaltungen ergeben sich aus den Unteransprüchen. Aufgabe der Erfindung ist es außerdem, eine Werkzeugmaschine zu schaffen, mit der ein einfacher Werkzeugwechsel möglich ist, so dass die oben genannten Nachteile vermieden werden.

Zur Lösung dieser Aufgabe wird eine Werkzeugmaschine vorgeschlagen, die die in Anspruch 22 genannten Merkmale aufweist. Sie umfasst mindestens eine Werkzeugspindel, die dazu dient, ein Werkzeug aufzunehmen, außerdem wenigstens ein der Bearbeitung eines Werkstücks dienendes Werkzeug sowie eine Werkstückaufnahme, die das zu bearbeitende Werkstück unmittelbar oder mittels einer Palette, einer Zwischenhaltung oder dergleichen aufnimmt. Die Werkstückaufnahme und/oder die Werkzeugspindel sind beweglich ausgebildet, sodass zur Bearbeitung eines Werkstücks eine Relativbewegung zwischen dem von der Werkstückaufnahme gehaltenen Werkstück und dem von der Werkzeugspindel gehaltenen Werkzeug ermöglicht wird. Die Werkzeugmaschine zeichnet sich dadurch aus, dass sie eine Werkzeugwechseleinrichtung nach einem der Ansprüche 8 bis 14 umfasst, die eine Wechselvorrichtung aufweist. Diese ist anstelle eines Werkstücks von der Werkstückaufnahme erfassbar. Es ist also möglich, die Werkzeugmaschine mit einer als Werkstück-Dummy dienenden Wechselvorrichtung zu beschicken, die von der Werkstückaufnahme gehalten wird. Entscheidend ist, dass die Werkzeugmaschine für einen Werkzeugwechsel nicht grundlegend verändert werden muss. Es werden die für die Bearbeitung von Werkstücken erforderlichen Freiheitsgrade der Werkzeugmaschine ausgenutzt, die ohnehin in der Lage ist, ein Werkzeug mit dem Werkstück in Eingriff zu bringen, um hier eine gewünschte Bearbeitung vorzunehmen. Anstelle eines Werkstücks wird der Werkzeugmaschine nunmehr eine Wechselvorrichtung zugeführt, die ein verschlissenes oder beschädigtes Werkzeug aufnehmen kann, oder ein Werkzeug, das für einen bestimmten Bearbeitungsschritt vorgesehen war. Die Wechselvorrichtung ist außerdem in der Lage, ein Ersatzwerkzeug für ein beschädigtes oder verschlissenes Werkzeug bereitzustellen, oder aber ein Werkzeug, mit dem ein anderer Bearbeitungsvorgang durchgeführt werden soll.

Bei bekannten Werkzeugmaschinen bedarf es besonderer Antriebsvorrichtungen, um besondere Bewegungsabläufe mit der Werkzeugspindel realisieren zu können, beispielsweise um ein Werkzeug aus einer an der Werkzeugaufnahme vorgesehenen Halterung abzunehmen und einem Magazin zuzuführen. Die herkömmliche Werkzeugmaschine muss also speziell ausgebildet sein, um nicht nur die bei der Bearbeitung eines Werkstücks erforderlichen Bewegungsabläufe realisieren zu können, sondern auch solche Bewegungen, die bei der Ablage eines Werkzeugs in einen Halter, bei der Aufnahme eines Werkzeugs aus dem Halter und/oder bei der Überführung eines Werkzeugs aus dem Halter in ein Magazin und umgekehrt erforderlich sind. Dies führt zu einer wesentlichen Vereinfachung der Werkzeugmaschine, die überdies kein Magazin mehr aufzuweisen braucht, das in der Regel in unmittelbarer Nähe des Bearbeitungsorts eines Werkstücks angeordnet ist und daher viel Platz braucht. Im Übrigen ist festzustellen, dass die Werkzeugmaschine keine gesonderten Manipulatoren braucht, die ein Werkzeug aus einem Magazin entnehmen und in die Werkzeugspindel einsetzen oder aus dieser nehmen und in einem Magazin oder dergleichen ablegen. Auch dies führt einerseits zur Raumersparnis, andererseits zu wesentlich kostengünstigeren Realisierungsmöglichkeiten der Werkzeugmaschine.

Ein besonders bevorzugtes Ausführungsbeispiel der Werkzeugmaschine zeichnet sich dadurch aus, dass diese als Bearbeitungszentrum ausgebildet ist. Es ist also auf einfache Weise möglich, Werkzeugmaschinen der hier genannten Art in Bearbeitungszentren einzusetzen und dabei die oben angesprochenen Raum- und Preisvorteile zu realisieren.

Bei einem weiteren bevorzugten Ausführungsbeispiel der Werkzeugmaschine ist vorgesehen, dass diese als Sonderbearbeitungsmaschine ausgebildet ist. Auch hier ergeben sich die oben genannten Vorteile bezüglich Raumbedarf und Kosten.

Besonders bevorzugt wird ein Ausführungsbeispiel der Werkzeugmaschine, das sich dadurch auszeichnet, dass diese als Sonderbearbeitungsmaschine ausgebildet ist und einen Arbeitsraum mit diesen begrenzenden Wänden aufweist. An den Wänden ist eine Anzahl von Werkzeugspindeln vorgesehen, die vorzugsweise unterschiedliche Werkzeuge tragen und dazu dienen, Werkstücke zu bearbeiten. Diese werden mittels eines Maschinentischs den Werkzeugen zugeführt. Kennzeichen des bevorzugten Ausführungsbeispiels der Werkzeugmaschine ist es, dass hier eine Wechselvorrichtung vorgesehen ist, die eine Anzahl von Aufnahmen aufweist. Diese sind so angeordnet und ausgebildet, dass sie nicht nur ein einziges sondern in einem einzigen Verfahrensgang mehrere Werkzeuge austauschen kann, die an einer der Wände des Arbeitsraums angeordnet sind. Dies führt zu einer wesentlichen Beschleunigung eines Werkzeugwechsels. Es zeigt sich auch, dass der Arbeitsraum, der Maschinentisch und die anderen Elemente der Sonderbearbeitungsmaschine in keiner Weise verändert werden müssen, um einen Werkzeugwechsel mittels der hier beschriebenen Werkzeugwechseleinrichtung durchzuführen. Dasselbe gilt im Übrigen für das oben angesprochene Bearbeitungszentrum.

Nach allem zeigt sich, dass bestehende Werkzeugmaschinen auf einfache Weise mit einer Werkzeugwechseleinrichtung der hier angesprochenen Art nachgerüstet werden können.

Weitere Ausgestaltungen ergeben sich aus den übrigen Unteransprüchen.

Die Erfindung wird im Folgenden anhand der Zeichnung näher erläutert. Es zeigen:
- Figur 1: einen Schnitt durch eine Wechselvorrichtung einer Werkzeugwechseleinrichtung;
- Figur 2: eine Draufsicht auf eine Rastscheibe der Wechselvorrichtung gemäß Figur 1;
- Figur 3: eine Seitenansicht eines Werkzeugs, das in Zusammenhang mit der Werkzeugwechseleinrichtung gemäß Figur 1 verwendet wird;
- Figur 4: eine Stirnansicht des Werkzeugs gemäß Figur 3;
- Figur 5: eine Prinzipskizze einer Transferlinie;
- Figur 6: einen Halter zur Aufnahme eines Werkzeugs gemäß den Figuren 3 und 4;
- Figur 7: eine Prinzipskizze eines Bearbeitungszentrums mit Pickup-Einrichtung; und
- Figur 8: eine Prinzipskizze einer Sonderbearbeitungsmaschine.

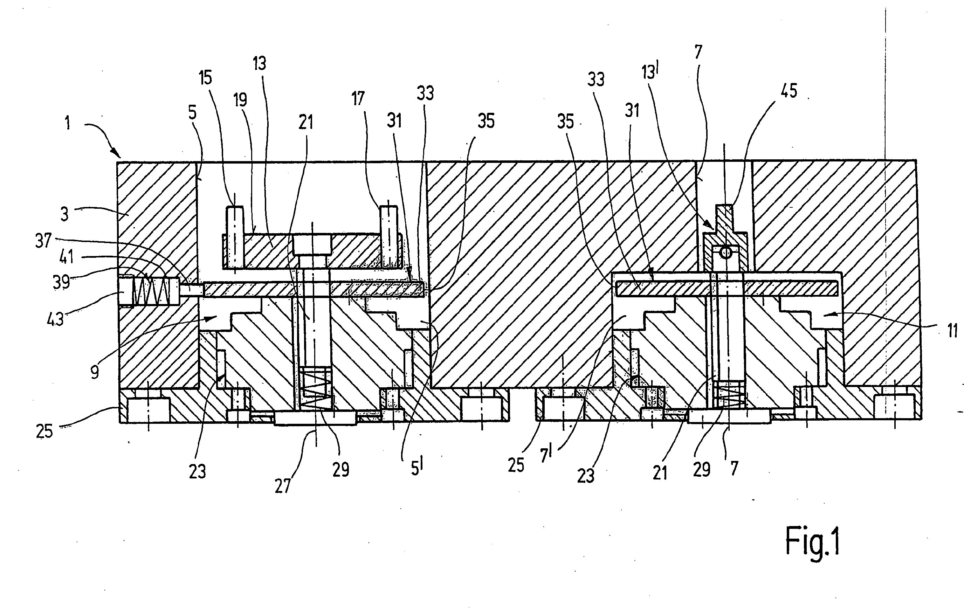

Figur 1 zeigt einen Schnitt durch eine Wechselvorrichtung 1 einer Werkzeugwechseleinrichtung. Die Wechselvorrichtung 1 weist einen Grundkörper 3 auf, der hier beispielhaft zwei als Ausnehmungen 5 und 7 ausgebildete Aufnahmebereiche umfasst. Diese dienen der

Aufnahme eines Werkzeugs, das hier allerdings nicht wiedergegeben ist.

Der Innendurchmesser der Ausnehmungen 5 und 7 ist verschieden groß. Entsprechend können Werkzeuge mit verschiedenen Außendurchmessern im Grundkörper 3 der Wechselvorrichtung 1 aufgenommen werden.

In den Ausnehmungen 5, 7 sind Eingriffseinrichtungen 9 und 11 vorgesehen, die dazu dienen, ein in die Ausnehmungen 5, 7 eingebrachtes Werkzeug zu erfassen.

Die Eingriffseinrichtungen 9 und 11 sind an Werkzeuge unterschiedlicher Größe und an Werkzeuge mit verschiedenen Konturen anpassbar. Beispielsweise weist die in Figur 1 links dargestellte Eingriffseinrichtung 9 in der Ausnehmung 5 einen Teller 13 auf, der so ausgelegt ist, dass er ein in die Ausnehmung 5 eingeführtes Werkzeug drehfest erfasst, also so, dass eine Relativdrehung zwischen dem Werkzeug und dem Teller 13 nicht möglich ist. Beispielsweise ist der Teller 13 mit mindestens einem, hier zwei gegenüberliegenden Stiften 15 und 17 versehen, die über die nach oben weisende Oberseite 19 des Tellers hinaus stehen und in geeignete Ausnehmungen in einem Werkzeug eingreifen können.

Der Teller 13 ist über eine Achse 21 mit einer Kupplung 23 gekoppelt, die beispielsweise als Rutschkupplung ausgelegt ist und ein vorzugsweise einstellbares Bremsmoment auf die Achse 21 ausüben kann. Die Eingriffseinrichtung 9, damit auch die Kupplung 23, sind mittels einer Montageplatte 25 am Grundkörper 3 der Wechselvorrichtung 1 angebracht.

Die Achse 21 ist in Richtung Ihrer Drehachse 27 gegen die Kraft einer Federeinrichtung 29, die beispielsweise eine Schrauben-Druckfeder aufweist, beweglich gelagert, und zwar dergestalt, dass sie gegen die Kraft der Federeinrichtung 29 in Richtung auf die Montageplatte 25 bewegt werden kann. Auf geeignete Weise kann der Bewegungsweg der Achse 21 begrenzt werden, beispielsweise durch einen Anschlag. Mit der Achse 21 ist eine Rastvorrichtung 31 drehfest verbunden. Diese weist eine Rastscheibe 33 auf, deren Kontur - in Draufsicht gesehen - im Wesentlichen sternförmig ist. Darauf wird unten näher eingegangen.

Die Rastvorrichtung 31 weist außerdem einen mit der Seitenfläche 35 der Rastscheibe zusammenwirkenden Rastbolzen 37 auf, der nachgiebig gegen die Seitenfläche 35 angedrückt wird. Die Andrückkräfte werden durch ein Federelement 39 realisiert, das beispielsweise eine als Druckfeder ausgebildete Schraubenfeder umfasst. Der Rastbolzen 37 und das Federelement 39 sind in einer in den Grundkörper 3 der Wechselvorrichtung 1 eingebrachten Ausnehmung 41 untergebracht, die beispielsweise durch eine Schraube 43 verschlossen ist, die auch als Widerlager für das Federelement 39 dient. Der Rastbolzen 37 wird also in Richtung auf die Drehachse 27 in das Innere der Ausnehmung 5 gedrückt, um mit der Rastscheibe 33 zusammenzuwirken.

Die Rastvorrichtung 31 ist so ausgelegt, dass sich die Achse 21, damit die hier angebrachte Rastscheibe 33 und der Teller 13 in einer Richtung frei drehen können, während in der entgegengesetzten Richtung eine Verriegelung zwischen Grundkörper 3 und Rastscheibe 33 gegeben ist und damit eine freie Drehung der Achse 21 verhindert wird.

In der Ausnehmung 7 ist die Eingriffseinrichtung 11 untergebracht, deren Funktionsweise der Eingriffseinrichtung 9 entspricht. Gleiche Teile sind mit gleichen Bezugsziffern versehen, so dass auf die Beschreibung der Eingriffseinrichtung 9 verwiesen wird.

Zur Vereinfachung ist bei der Darstellung der Eingriffseinrichtung 11 auf Teile der Rastvorrichtung 31 verzichtet worden: Der Rastbolzen 37, das Federelement 39 und die Schraube 43 sind hier aus Gründen der besseren Übersichtlichkeit weggelassen. Es wird aber auch bei der Eingriffseinrichtung 11 sichergestellt, dass diese in einer Richtung frei drehbar ist, während in der entgegengesetzten Richtung eine Drehbarkeit der Achse 21 verhindert wird.

Der einzige Unterschied der Eingriffseinrichtung 11 gegenüber der Eingriffseinrichtung 9 ist die Ausgestaltung des Bereichs, der mit einem Werkzeug in Eingriff tritt, das in die Ausnehmung 7 eingeführt wird. Die Eingriffseinrichtung 11 weist einen Steckeinsatz 13' auf, der, wie der Teller 13, drehfest mit der Achse 21 verbunden ist, so dass hier, wie bei der Eingriffseinrichtung 9, eine Relativdrehung zwischen dem Steckeinsatz 13' zwischen der Achse 21 und der Rastscheibe 33 nicht möglich ist.

Der Steckeinsatz 13' weist hier einen Außenmehrkant 45 auf, vorzugsweise einen Sechskant, der in eine entsprechende Ausnehmung in der Stirnseite eines Werkzeugs eingreifen kann. Denkbar ist es aber auch, dass der Steckeinsatz 13' einen Innenmehrkant aufweist, der ein in die Ausnehmung 7 eingebrachtes Werkzeug von außen umgreift und dort mit einem Außenmehrkant zusammenwirkt.

Entscheidend ist, dass bei der Eingriffseinrichtung 11 mit dem Steckeinsatz 13', wie mit dem Teller 13 der Eingriffseinrichtung 9, eine Möglichkeit geschaffen wird, ein in die Ausnehmung 7 eingeführtes Werkzeug drehfest zu erfassen.

Nur der Vollständigkeit halber sei hier festgehalten, dass die Eingriffseinrichtung 11 eine vorzugsweise als Rutschkupplung ausgebildete Kupplung 23 aufweist und von einer Montageplatte 25 am Grundkörper 3 der Wechselvorrichtung 1 befestigt ist.

Vorzugsweise sind beide Eingriffseinrichtungen 9 und 11 in Ausnehmungen 5', 7' untergebracht, die in die Ausnehmungen 5, 7 übergehen können. Links in Figur 1 wird deutlich, dass bei entsprechender Auslegung der Ausnehmung 5 für ein aufzunehmendes Werkzeug die Ausnehmung 5' zur Aufnahme der Eingriffseinrichtung 9 den gleichen Durchmesser aufweist, so dass die Ausnehmungen 5 und 5' miteinander fluchten und ineinander übergehen.

Besonders vorteilhaft ist es, dass die Eingriffseinrichtungen 9 und 11 weitgehend identisch ausgebildet sind. Um Werkzeuge unterschiedlicher Größe und Kontur drehfest erfassen zu können, bedarf es lediglich des Austausches des Tellers 13 gegen den Steckeinsatz 13', wobei sowohl der Teller 13 als auch der Steckeinsatz 13' auch einen abweichenden Aufbau aufweisen können. Entscheidend ist allein, dass ein in die Ausnehmung 5 oder die Ausnehmung 7 eingeführtes Werkzeug drehfest von der Eingriffseinrichtung 9, 11 erfasst wird. Es ist also möglich, den Teller 13 und den Steckeinsatz 13' austauschbar zu gestalten, um die Eingriffseinrichtungen 9, 11 an unterschiedliche Werkzeuge anpassen zu können.

Auch bei der Eingriffseinrichtung 11 ist vorgesehen, dass der Steckeinsatz 13' in Richtung der Drehachse 27 der Achse 21 gegen die Kraft einer Federeinrichtung 29 verlagerbar ist.

Aus den Erläuterungen wird deutlich, dass es für die Funktion der Wechselvorrichtung 1 nicht darauf ankommt, dass die Aufnahmebereiche als Ausnehmung 5, 7, ausgebildet sind. Es ist also möglich, die Eingriffseinrichtungen 9 und 11 mit dem Teller 13 beziehungsweise dem Steckeinsatz 13' auf der Oberseite einer Wechselvorrichtung 1 vorzusehen. Es ist auch denkbar, auf der Wechselvorrichtung 1 Vorsprünge vorzusehen, die die Eingriffseinrichtungen 9 und 11 mit den zugehörigen Elementen tragen. Entscheidend ist allein, dass die Wechselvorrichtung 1 Aufnahmebereiche aufweist, die dazu dienen, auszutauschende Werkzeuge aufzunehmen und die anstelle der auszutauschenden Werkzeuge zu verwendenden neuen Werkzeuge bereitzustellen.

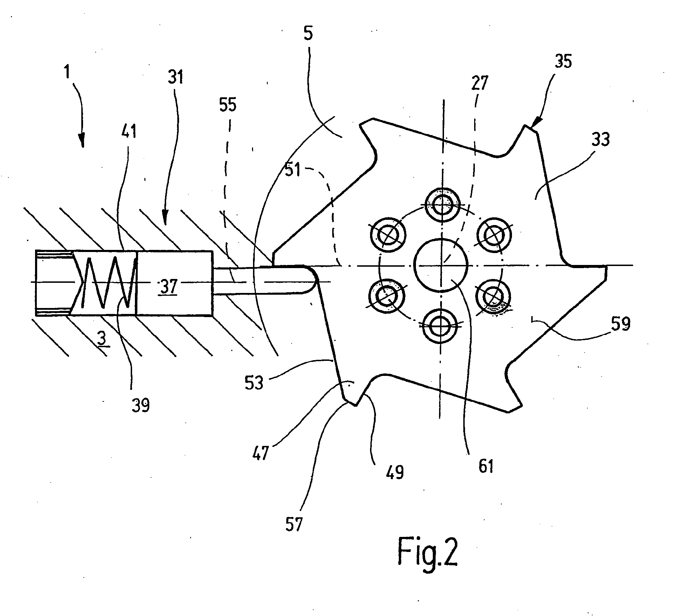

Figur 2 zeigt in Draufsicht die Rastscheibe 33, deren Seitenfläche 35 konturiert ausgebildet ist und eine Anzahl von Rastnasen 47 umfasst, die vorzugsweise identisch ausgebildet sind. Dabei ist vorgesehen, dass die Rastnasen 47 einerseits eine steil zur Drehachse 27 abfallende erste Flanke 49 aufweisen, die vorzugsweise mit einer Durchmesserlinie 51 zusammenfällt. Andererseits weisen die Rastnasen 47 eine einen spitzen Winkel zur ersten Flanke 49 aufweisende zweite Flanke 53 auf, wobei der Winkel zwischen den beiden Flanken 49 und 53 beispielsweise etwa 45° betragen kann.

In Figur 2 ist noch ein weiteres Teil der Rastvorrichtung 31 dargestellt, die, wie gesagt, auch die Rastscheibe 33 umfasst: Andeutungsweise ist hier der in den Grundkörper 3 der Wechselvorrichtung 1 eingesetzte Rastbolzen 37 erkennbar, der gegen die Kraft des Federelements 39 in der Ausnehmung 41 in Richtung seiner Längsachse 55 verlagerbar ist und in die Ausnehmung 5 hineinragt, um mit der Rastscheibe 33 zusammenzuwirken.

Deutlich erkennbar ist, dass in der hier dargestellten Funktionsstellung die erste Flanke 49 an der Seitenfläche des Rastbolzens 37 anliegt, so dass eine Drehung entgegengesetzt dem Uhrzeigersinn ausgeschlossen ist.

Wird die Rastscheibe 33 im Uhrzeigersinn gedreht, so drängt die zweite Flanke 53 den Rastbolzen 37 gegen die Kraft des Federelements 39 nach außen, hier nach links, wobei eine Drehbewegung im Uhrzeigersinn also möglich ist. Dabei gleitet die Stirnseite des Rastbolzens 37 auf der zweiten Flanke 53.

Erreicht bei einer Drehung der Rastscheibe 33 der Rastbolzen 37 den Verbindungsbereich 57 zwischen der ersten Flanke 49 und der zweiten Flanke 53, ist die maximale Zurückdrängung des Rastbolzens 37 erreicht. Bei einer weiteren Drehung der Rastscheibe 33 im Uhrzeigersinn kann der Rastbolzen 47 von dem Federelement 39 in Richtung der Drehachse 27 der Rastscheibe 33 in den zwischen den Rastnasen liegenden Freiraum gedrängt werden. Damit ist eine weitere Drehung der Rastscheibe 33 im Uhrzeigersinn möglich. Eine Drehung in entgegengesetzter Richtung wird jedoch wieder durch das Zusammenspiel zwischen der Seitenflanke des Rastbolzens 37 und der ersten Flanke 49 verhindert.

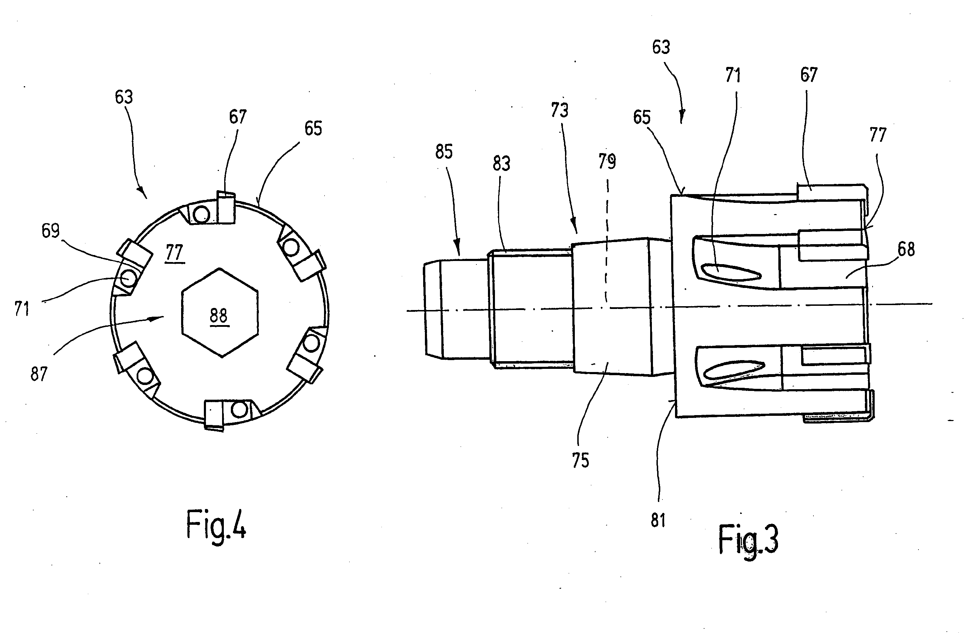

Figur 1 zeigt, dass die Rastscheibe 33 auf geeignete Weise mit der unterhalb der hier dargestellten Oberseite 59 der Rastscheibe gelegenen Kupplung drehfest verbunden ist. Beispielhaft sind hier in Figur 3 in gleichem Abstand auf einer gedachten Kreislinie angeordnete Schrauben vorgesehen. Durch eine zentrale Öffnung 61 in der Rastscheibe greift die Achse 21.

Eine Rastscheibe 33 der hier beschriebenen Art ist auch bei der Eingriffseinrichtung 11 vorgesehen. Es ist jedoch auch möglich, andersartig ausgebildete gleich wirkende Rasteinrichtungen bei einer oder beiden Eingriffseinrichtungen vorzusehen.

Figur 3 zeigt ein mit der Werkzeugwechseleinrichtung verwendbares Werkzeug 63 in Seitenansicht. Rein beispielhaft ist das Werkzeug 63 als Mehrschneidenreibahle ausgebildet. Es ist jedoch jedes beliebige Werkzeug verwendbar, auch solche, die, anders als das hier dargestellte Werkzeug, keine geometrisch definierten Schneiden aufweisen.

Grundsätzlich ist die Werkzeugwechseleinrichtung mit beliebigen Werkzeugen verwendbar. Hier ist beispielhaft ein Schneidkopf dargestellt, der von einem geeigneten Halter aufgenommen wird. Dieser ist seinerseits unmittelbar oder über Adapter, Zwischenstücke und dergleichen mit einer Werkzeugmaschine verbindbar.

Das in Figur 3 dargestellte Werkzeug 63 weist mindestens eine, hier sechs in gleichem Abstand zueinander in die Umfangsfläche 65 des Werkzeugs eingelassene Messerplatten 67 auf, denen jeweils ein Spanraum 69 zugeordnet ist. Bei dem hier dargestellten Ausführungsbeispiel mündet in jeden Spanraum ein Kühl-/Schmiermittelkanal 71, der mit einer Kühl-/Schmiermittelzufuhr verbunden ist, die das entsprechende Medium in das Werkzeug 63 einspeist.

An den vorderen Bereich des Werkzeugs 63 schließt sich eine Kopplungsstelle 73 an, über die das Werkzeug 63 grundsätzlich auch unmittelbar mit der Spindel einer Werkzeugmaschine verbindbar wäre. Vorzugsweise dient die Kopplungsstelle 73 dazu, das Werkzeug 63 mit einem Halter zu verbinden, der seinerseits mit einer Werkzeugmaschine gekoppelt ist. Grundsätzlich ist es aber auch möglich, das Werkzeug 63 über die Kopplungsstelle 73 mit einem Adapter, einem Zwischenstück oder dergleichen zu verbinden und darüber mit einer Werkzeugmaschine zu koppeln.

Die Kopplungsstelle 63 weist vorzugsweise einen Schaft 75 auf, der sich ausgehend von der Vorderseite 77 des Werkzeugs nach links verjüngt und vorzugsweise einen Außendurchmesser aufweist, der kleiner ist als der im Bereich der Umfangsfläche 65, in die die Messerplatten 67 eingesetzt sind. Dadurch ergibt sich eine senkrecht zur Drehachse 79 verlaufende Planfläche 81, die ringförmig ausgebildet ist und dazu dient, das Werkzeug 63 gegenüber einem Halter oder dergleichen axial exakt auszurichten, während der Schaft 75 eine exakt radiale Ausrichtung gewährleistet.

Auf der der Planfläche 81 abgewandten Seite des Schafts 75 ist ein Gewindeansatz 83 vorgesehen, über den das Werkzeug 63 an einem Halter oder dergleichen befestigbar ist. Der Außendurchmesser des Gewindeansatzes 83 ist kleiner als der kleinste Außendurchmesser des als Außenkegel ausgebildeten Schafts 75.

Auf der dem Schaft 75 abgewandten Seite des Gewindeansatzes 83 ist ein als Zentrierhilfe 85 dienender Ansatz vorgesehen, dessen Außendurchmesser kleiner ist als der des Gewindeansatzes und der auf seiner dem Gewindeansatz 83 abgewandten Seite eine konische Verjüngung aufweist, die das Eindringen des Gewindeansatzes 83 in ein zugehöriges Innengewinde erleichtert.

Bei dem hier dargestellten Ausführungsbeispiel ist das Werkzeug 63 bis auf die Messerplatten 67 einstückig ausgebildet. Es ist aber auch möglich, in den Kopf des Werkzeugs 63 einen Schaft 75 einzuschrauben. Denkbar ist es im Übrigen, die Zentrierhilfe 85 als einsetzbares Element auszubilden und beispielsweise aus Kunststoff herzustellen, weil hier die Belastungen geringer sind. Am einfachsten ist es jedoch, das Werkzeug 63 einstückig und aus Metall herzustellen.

Figur 4 zeigt eine Ansicht der auch als Stirnseite bezeichneten Vorderseite 77 des Werkzeugs 63. Gleiche Teile sind mit gleichen Bezugsziffern versehen, so dass auf die Beschreibung zu Figur 3 verwiesen wird. Besonders deutlich wird hier, dass in die Umfangsfläche 65 mindestens eine, hier vorzugsweise sechs in gleichem Abstand zueinander angeordnete Messerplatten 67 eingesetzt sind, die eine definierte Schneide aufweisen und dazu dienen, Späne von der Oberfläche eines Werkstücks abzutragen. Deutlich wird hier auch, dass jeder Messerplatte ein Spanraum 69 zugeordnet ist, in den ein Kühl-/Schmiermittelkanal 71 mündet, um die von einer Messerplatte 67 abgetragenen Späne aus dem Bearbeitungsbereich heraus zu tragen. Das Werkzeug 63 kann auch mindestens eine, hier nicht dargestellte, in die Umfangsfläche 65 eingesetzte Führungsleiste aufweisen.

Das Werkzeug 63 ist mit einem Montageabschnitt 87 versehen, der dazu dient, das Werkzeug 63 zu erfassen und von dem im Bereich der Kopplungsstelle 73 vorhandenen Gegenstück zu lösen.

Bei dem hier dargestellten Ausführungsbeispiel weist der Montageabschnitt eine in die Vorderseite 77 eingebrachte Ausnehmung 89 auf, die eine Mehrkantkontur zeigt. Es ist also möglich, mit einem Steckeinsatz 13' der oben beschriebenen Art mit dem Montageabschnitt 87 des Werkzeugs 63 zusammenzuwirken, nämlich den Steckeinsatz 13' in die Ausnehmung 89 einzuführen. Auf diese Weise ist es möglich, das Werkzeug 63 über die Kopplungsstelle 73 mit einem Halter oder dergleichen zu verbinden, beziehungsweise von diesem abzubauen. Die Montage und Demontage eines Werkzeugs 63 erfolgt also durch das Zusammenspiel zwischen einer Eingriffseinrichtung 9, 11 und einem Montageabschnitt 87 eines Werkzeugs 63.

Der Montageabschnitt 87 kann so ausgebildet sein, dass das Werkzeug 63 von der Eingriffseinrichtung 9, 11 verliersicher gehalten wird, also nicht aus den Ausnehmungen 5, 7 der Wechselvorrichtung 1 herausfallen kann. Besonders bevorzugt ist jedoch ein Ausführungsbeispiel der Wechselvorrichtung 1, das sich dadurch auszeichnet, dass noch eine zusätzliche Sicherung vorgesehen ist, die verhindert, dass das Werkzeug 63 bei Bewegungen der Wechselvorrichtung 1 aus den Ausnehmungen 5, 7 heraus fällt. Es können hier nachgiebig federnde Sicherungselemente vorgesehen werden, die mit dem Werkzeug 63 zusammenwirken und beispielsweise durch Reibkräfte Halt geben. Denkbar ist es aber auch, dass die Sicherung mindestens einen Magneten ausweist, der das Werkzeug 63 hält. Dabei ist es möglich, die Sicherung im Bereich der Außenwand der Ausnehmung 5, 7 vorzusehen, oder aber an der Eingriffseinrichtung 9, 11, insbesondere am Teller 13 oder am Steckeinsatz 13'. Schließlich ist es auch denkbar, eine derartige Sicherung im Bereich des Montageabschnitts 87 vorzusehen. Entscheidend ist, dass das Werkzeug 63 gegen axiale Verlagerung in der Ausnehmung 5, 7 gesichert und lösbar gehalten wird.

Es ist ohne weiteres ersichtlich, dass bei dem Werkzeug 63 auch eine oder mehrere Vertiefungen in der Vorderseite 77 vorgesehen werden können, die den Montageabschnitt 87 bilden. Diese Vertiefungen wirken dann mit dem mindestens einen Stift 15 des Teller 13 der Eingriffseinrichtung 9 zusammen, um das Werkzeug 63 zu montieren oder zu demontieren. Denkbar ist es schließlich auch, an dem Werkzeug 63 außen Angriffsflächen für einen hülsenförmigen Steckschlüssel vorzusehen, der das Werkzeug 63 umgreift und mit diesen Flächen zusammenwirkt, die damit den Montageabschnitt 87 realisieren.

Entscheidend ist also allein das Zusammenspiel zwischen Eingriffseinrichtung und Montageabschnitt und nicht die Ausgestaltung der Eingriffseinrichtung beziehungsweise des Montageabschnitts im Einzelnen.

Aus den Erläuterungen zu den Figuren 3 und 4 wird deutlich, dass hier ein Werkzeug 63 dargestellt ist, das dazu dient, in Zusammenhang mit einem Werkzeugwechseleinrichtung eingesetzt zu werden, welches eine Wechselvorrichtung 1 gemäß den Figuren 1 und 2 aufweist.

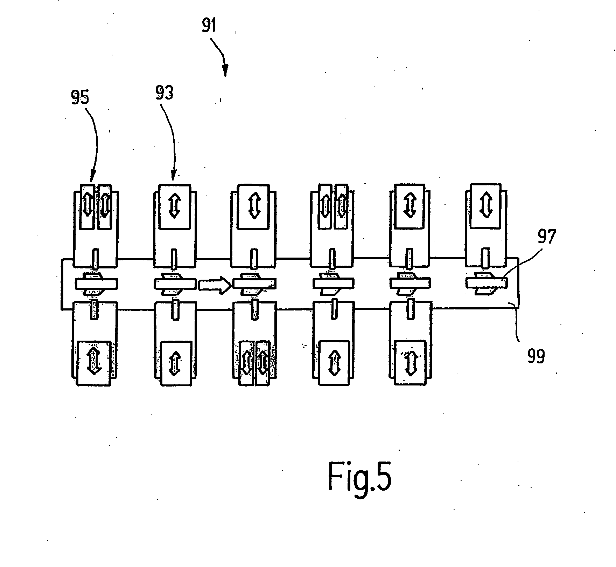

Figur 5 zeigt eine Prinzipskizze einer Transferlinie 91 mit beispielsweise 11 Bearbeitungseinrichtungen, die jeweils ein Werkzeug oder eine Anzahl von Werkzeugen umfassen. Beispielhaft ist hier eine Bearbeitungsstation 93 vorgesehen, die eine verschieblich gelagerte Werkzeugeinrichtung umfasst. Eine andere Bearbeitungsstation 95 weist beispielhaft zwei verschieblich gelagerte Werkzeugeinrichtungen auf. Die Werkzeugeinrichtung der Bearbeitungsstationen 93, 95 können jeweils eine oder mehrere Spindeln zur Aufnahme von Werkzeugen aufweisen.

In Figur 5 sind mehrere Werkstücke 97 dargestellt, die von einer Fördereinrichtung 99 entlang der Transferlinie 91 transportiert werden und jeweils im Bereich einer Bearbeitungsstation 93, 95 während eines Bearbeitungstaktes anhalten. Figur 5 zeigt deutlich, dass die Bearbeitungsstationen paarweise gegenüberliegend oder auch einzeln auf einer Seite der Transferlinie 91 angeordnet sein können.

Die in Figur 5 dargestellte Transferlinie 91 zeichnet sich dadurch aus, dass die Werkstücke 97 entlang einer gerade Bewegungsbahn transportiert werden. Die Bearbeitungsstationen können aber auch entlang einer gedachten Kreislinie einzeln, oder paarweise gegenüberliegend angeordnet sein. Grundsätzlich ist es auch möglich, Bearbeitungsstationen auf einer um den Bewegungspfad der Werkstücke 97 gelegten Kreislinie - also nicht nur in einer Ebene - anzuordnen.

Das Werkstück 97 wird von der Fördereinrichtung 99 von Bearbeitungsstation zu Bearbeitungsstation weitergeführt, wo es einzelnen Bearbeitungsschritten unterworfen wird. Da pro Zeiteinheit an mehreren entlang der Bewegungsbahn angeordneten Bearbeitungsstationen eine Bearbeitung gleichzeitig an verschiedenen Werkstücken erfolgt, ergibt sich eine hohe Ausbringung pro Zeiteinheit, weil pro Takt ein fertiges Werkstück am Ende der Transferlinie anfällt. Dasselbe gilt auch für Rundtaktmaschinen, bei denen die Werkstücke 97 entlang einer Kreisbahn befördert werden.

Zur Bearbeitung von Werkstücken werden Transferlinien und Rundtaktmaschinen eingesetzt, wie sie anhand von Figur 5 erläutert wurden. Pro Bearbeitungstakt werden im Bereich der Bearbeitungsstationen 93, 95 eine oder mehrere Werkzeuge, die von Spindeln gehalten und in Rotation versetzt werden, mit dem Werkstück 97 in Eingriff gebracht. Vor dem Weitertransport des Werkstücks werden die Werkzeuge zurückverlagert, so dass das Werkstück ohne Beschädigung der Werkzeuge weiter transportiert werden kann.

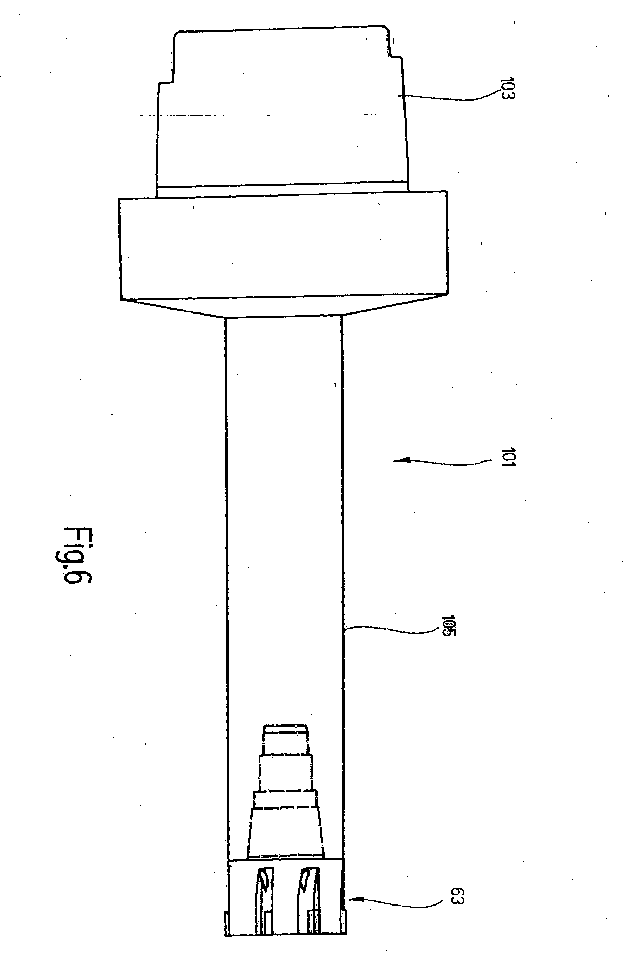

Figur 6 zeigt eine Prinzipskizze eines Halters 101 mit einem Werkzeug 63, wie es anhand der Figuren 3 und 4 erläutert wurde. Der Halter 101 weist einen Schaft 103 auf, über den der Halter 101 mit einer Werkzeugmaschine, gegebenenfalls über Adapter und Zwischenstücke, verbindbar ist. Er weist außerdem einen vorzugsweise zylindrischen Ansatz 105 auf, an dem das Werkzeug 63 befestigbar ist.

Der Halter 101 zeichnet sich dadurch aus, dass er unterschiedliche Werkzeuge aufnehmen kann. Es ist also möglich, zur Bearbeitung von Werkstücken verschiedenste Werkzeuge in den Halter 101 einzusetzen und nur diese bei Bedarf auszutauschen. Bereits aus der Prinzipskizze nach Figur 6 ist ersichtlich, dass der Raumbedarf zur Bereitstellung verschiedener Werkzeuge wesentlich geringer ist als der, der zum Austausch des kompletten Halters 101 erforderlich wäre.

Die Wechselvorrichtung 1 bietet nach allem die Möglichkeit, lediglich Werkzeuge 63 auszutauschen, die Teil einer mehrteiligen Werkzeugeinrichtung, insbesondere eines Halters 101, sind.

Es wird deutlich, dass ein Halter der hier angedeuteten Art Werkzeuge verschiedenster Ausbildung aufnehmen kann. Damit wird die Bevorratung von Haltern wesentlich vereinfacht. Es bedarf nur weniger verschiedener Halter, um eine Vielzahl unterschiedlicher Werkzeuge für die Bearbeitung von Werkstücken bereitstellen zu können.

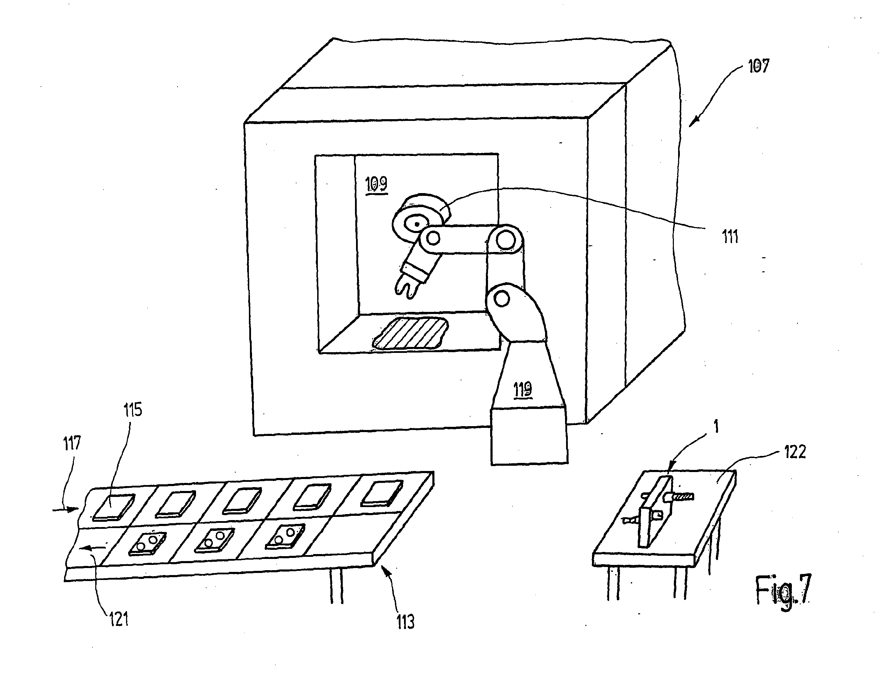

Figur 7 zeigt eine Prinzipskizze eines Bearbeitungszentrums 107 mit einem Arbeitsraum 109, in dem Werkstücke mittels eines Werkzeugs bearbeitet werden. Hier ist lediglich eine Werkzeugspindel 111 angedeutet, die unterschiedliche Werkzeuge aufnehmen kann.

Mittels einer geeigneten Transporteinrichtung 113 werden Werkstücke 115 angeliefert, was durch einen Pfeil 117 angedeutet ist. Mittels eines auch als Pickup-Einrichtung bezeichneten Roboters 119 werden Werkstücke 115 von der Transporteinrichtung 113 in den Arbeitsraum 109 verlagert, wo sie bearbeitet werden. Nach der Bearbeitung werden die Werkstücke von dem Roboter 119 wieder der Transporteinrichtung 113 zugeführt und, wie durch einen Pfeil 121 angedeutet, weitertransportiert.

Falls ein Werkzeug verschlissen ist, oder falls ein Werkzeug zur Durchführung eines anderen Bearbeitungsschrittes ausgetauscht werden muss, ist auf einfache Weise ein Werkzeugwechsel möglich. Der Roboter 119 kann dem Bearbeitungszentrum 107 eine Wechselvorrichtung 1 zuführen, die das auszutauschende Werkzeug aufnimmt und ein anderes Werkzeug zur weiteren Bearbeitung von Werkstücken 115 bereitstellt.

Bei dem Bearbeitungszentrum 107 nach Figur 7 wird also die Wechselvorrichtung 1 dem Bearbeitungszentrum zugeführt und in dessen Arbeitsraum 109 verlagert, so dass ein in der Werkzeugspindel 111 vorhandenes Werkzeug an die Wechselvorrichtung 1 abgegeben und ein neues Werkzeug aufgenommen werden kann. Dabei ist es möglich, komplette Werkzeuge auszutauschen oder aber, falls in die Werkzeugspindel 111 ein Halter 101 nach Figur 6 eingesetzt ist, lediglich Teile einer mehrteiligen Werkzeugeinrichtung auszutauschen.

Nach den Erläuterungen zu Figur 6 ist es besonders vorteilhaft, einen Halter 101 in die Werkzeugspindel 111 einzusetzen und dann lediglich Werkzeuge 63 mittels der oben beschriebenen Wechselvorrichtung 1 auszutauschen.

Bei dem in Figur 7 dargestellten Ausführungsbeispiel ist die Wechselvorrichtung 1 auf einer geeigneten Ablage 122 bereitgestellt. Dorthin werden also der Werkzeugspindel 111 entnommene Werkzeuge abgesetzt, dort werden auch Austauschwerkzeuge bereitgestellt. Es ist jedoch grundsätzlich möglich, auch im Arbeitsraum 109 Werkzeuge für einen Werkzeugwechsel bereitzustellen. Diese können dann auf einer dort vorgesehenen Ablage zwischengelagert werden, gegebenenfalls unter einer beweglichen Abdeckung, damit sie gegen bei der Bearbeitung von Werkstücken 115 anfallende Späne und gegen Kühl-/Schmiermittel geschützt sind.

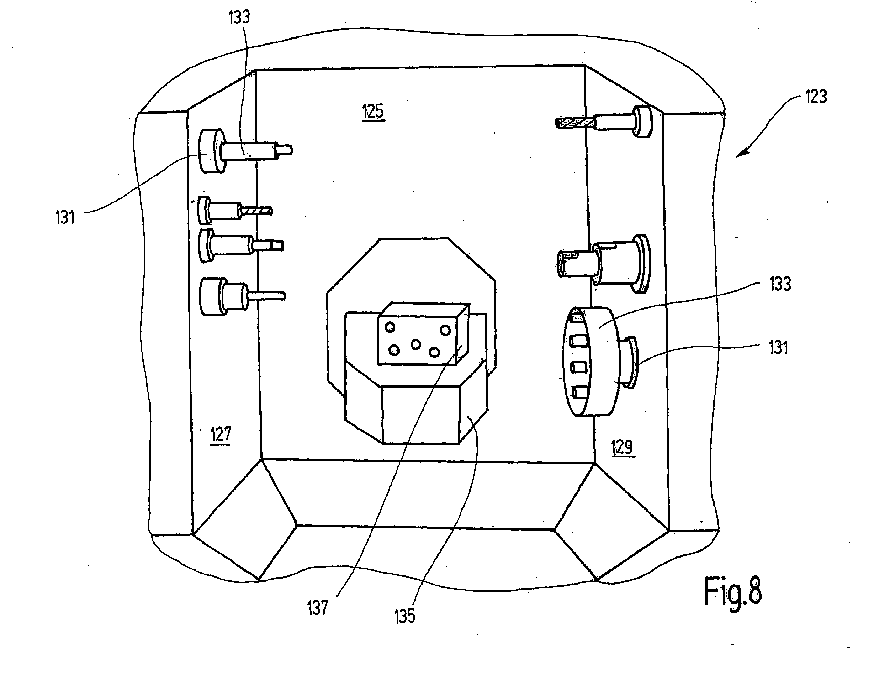

Figur 8 zeigt eine Prinzipskizze einer Sonderbearbeitungsmaschine 123 mit einem Arbeitsraum 125, der von Wänden 127, 129 begrenzt wird. In diese sind eine Anzahl von Werkzeugspindeln 131 eingesetzt, die verschiedene Werkzeuge aufnehmen können, unter anderem und insbesondere auch Halter 101, wie sie anhand von Figur 6 erläutert wurden. Die Werkzeuge 133 werden bei Sonderbearbeitungsmaschinen 123 der hier angesprochenen Art in der Regel ausschließlich in Rotation versetzt und führen keine Axialbewegung in Richtung der Drehachse der Werkzeugspindeln 131 aus.

In den Arbeitsraum 125 können mittels eines in mehreren Achsen beweglichen Maschinentisches 135 Werkstücke eingebracht, die den verschiedenen Werkzeugen 133 zur Bearbeitung zugeführt werden.

Bei einem Werkzeugwechsel in Zusammenhang mit einer Sonderbearbeitungsmaschine 123 gemäß Figur 8 wird das auszutauschende Werkzeug von einer Wechselvorrichtung 1 aufgenommen, die mittels des Maschinentischs 135 einer Werkzeugspindel 131 zugeführt wird, um das auszutauschende Werkzeug aufzunehmen.

Entweder wird dann dieser Werkzeugspindel 131 mit einer weiteren Wechselvorrichtung 1 ein neues Werkzeug zugeführt. Oder aber es wird der Maschinentisch 135 so bewegt, dass ein auszutauschendes Werkzeug, das auch in die Wechselvorrichtung 1 eingesetzt wird, nun der Werkzeugspindel 131 zugeführt werden kann.

Es gilt also hier, wie bei dem Bearbeitungszentrum 107 gemäß Figur 7 das gleiche Grundprinzip: Das auszutauschende Werkzeug und das Ersatzwerkzeug können unterschiedlichen Wechselvorrichtungen 1 zugeordnet sein. Es ist aber auch möglich, mittels einer einzigen Wechselvorrichtung das auszutauschende Werkzeug aufzunehmen und das Ersatzwerkzeug bereitzustellen.

Bei der Verwendung von Sonderbearbeitungsmaschinen 123 wird also insofern ein besonderes Bearbeitungsprinzip verfolgt, als diese zwar mindestens eine, vorzugsweise eine Anzahl von Werkzeugspindeln 131 aufweist, die in wenigstens einer den Arbeitsraum 125 umgebenden Wand 127, 129 angebracht und in der Regel gemeinsam angetrieben werden. Die den Werkzeugen 133 zugeordneten Werkzeugspindeln 131 führen keine in Richtung der Rotationsachse liegende Transversalbewegung durch. Die zur Bearbeitung eines Werkstücks 137 erforderlichen Bewegungen werden ausschließlich vom Werkstück 137 selbst durchgeführt, das auf dem in mehreren Achsen beweglichen Maschinentisch 135 aufgespannt ist und nacheinander die verschiedenen Werkzeuge 133 anfährt. Es ist möglich, im Arbeitsraum der Sonderbearbeitungsmaschine 123 so viele feste Werkzeugspindeln 131 und, zugehörige Werkzeuge 133 anzuordnen, dass während eines Bearbeitungszyklusses kein Werkzeugwechsel erforderlich ist. Das Werkstück 137 kann nacheinander alle erforderlichen Werkzeuge anfahren, so dass die so genannten Span-zu-Span-Zeiten extrem verkürzt werden. Die Sonderbearbeitungsmaschine 123 kann die unterschiedlichsten Werkzeuge 133 aufweisen, beispielsweise Bohrer, Fräsköpfe, Reibahlen oder dergleichen.

Ein Werkzeugwechsel der hier angesprochenen Art führt jedoch zu ungewollten, häufig auch langen Bearbeitungspausen.

Es ist bekannt, bei der Bearbeitung von Werkstücken Werkzeugmaschinen mit einem oder mehreren Werkzeugen einzusetzen. Falls ein Werkzeug verschlissen oder defekt ist, wird es entweder manuell oder automatisch ausgetauscht. In Zusammenhang mit voll automatisierten Zerspanungsprozessen sind Werkzeugmaschinen bekannt, die Werkzeugmagazine aufweisen. Die Werkzeugmaschine kann aus dem Magazin herangeführte Werkzeuge aufnehmen oder dort abholen, um ein defektes beziehungsweise verschlissenes Werkzeug gegen ein anderes auszutauschen. Entsprechend wird auch vorgegangen, wenn bei der Bearbeitung eines Werkstücks unterschiedliche Werkzeuge eingesetzt werden müssen. Hierbei tritt das bereits angesprochene Problem auf, dass bei einem Austausch kompletter Werkzeuge ein relativ hoher Platzbedarf gegeben ist. Bei der Verwendung von Werkzeugmagazinen muss für jedes Werkzeug ein separater Platz bereitgestellt werden, so dass die Magazine relativ groß ausfallen, oder nur eine begrenzte Zahl von Werkzeugen aufnehmen können.

Muss in Zusammenhang mit Transferlinien 91 oder Rundtaktmaschinen ein Werkzeug einer Bearbeitungsstation wegen eines Defekts oder wegen Verschleiß ausgetauscht werden, so führt dies zur Stilllegung der kompletten Transferlinie beziehungsweise der Rundtaktmaschine. Dasselbe gilt für anhand von Figur 8 erläuterten Sonderbearbeitungsmaschinen 123: Falls ein Werkzeug 133 verschlissen oder defekt ist, muss die Maschine angehalten und das Werkzeug in der Regel von Hand gewechselt werden.

Mit einer Werkzeugwechseleinrichtung der hier angesprochenen Art und bei Verwendung von Werkzeugen, wie sie hier beschrieben wurden, kann auf einfache Weise ein Werkzeugwechsel durchgeführt werden. Dies gilt sowohl für Werkzeugmaschinen mit einer einzigen ein Werkzeug haltenden Spindel als auch für Transferlinien 91, Rundtaktmaschinen und Sonderbearbeitungsmaschinen 123 der oben erläuterten Art.

Im Folgenden wird also auf die Funktion der Werkzeugwechseleinrichtung aber auch auf ein Verfahren zum Wechseln mindestens eines Werkzeugs, beispielsweise des Werkzeugs 63 gemäß den Figuren 3 und 4 näher eingegangen:

Bei Verschleiß oder Defekt eines Werkzeugs wird eine Wechselvorrichtung 1 in den Arbeitsbereich einer Werkzeugmaschine gebracht. Diese fährt die Wechselvorrichtung 1 wie ein Werkstück an, daher wird die Wechselvorrichtung 1 auch als Werkstück-Dummy bezeichnet. Das Werkzeug der Werkzeugmaschine fährt den mindestens einen Aufnahmebereich, hier die mindestens eine Ausnehmung 5, 7 an, die in den Grundkörper 3 der Wechselvorrichtung 1 eingebracht ist, oder aber die Wechselvorrichtung 1 wird der Werkzeugmaschine zugeführt. Die in der Ausnehmung 5, 7 vorgesehene Eingriffseinrichtung 9, 11 wirkt beim Einfahren des Werkzeugs in die Ausnehmung 5, 7 mit dessen Montageabschnitt 87 zusammen. Aus Figur 1 wird deutlich, dass also die Stifte 15, 17 des Tellers 13 in geeignete Ausnehmungen des Werkzeugs 63 eingreifen, die dessen Montageabschnitt 87 bilden. Entsprechend kann der Steckeinsatz 13' der Eingriffseinrichtung 11 mit einem Montageabschnitt 87 eines Werkzeugs zusammenwirken, das in die Ausnehmung 7 eingeführt wird.

Das nicht rotierende Werkzeug wird beim Einführen in die Ausnehmung 5, 7 axial, also in Richtung der Mittelachse 27 bewegt, bis die Stifte 15, 17 beziehungsweise der Steckeinsatz 13' die Vorderseite 77 des Werkzeugs 63 berührt. Durch eine langsame Rotationsbewegung des Werkzeugs, die von der Werkzeugmaschine bewirkt wird, wird die Relativposition zwischen Montageabschnitt 87 und der Eingriffseinrichtung 9, 11 so lange verändert, bis die Stifte beziehungsweise der Steckeinsatz in den Montageabschnitt 87 verdrehsicher einrasten. Das Werkzeug 63 kann mit leichtem Druck gegen die Eingriffseinrichtung 9, 11 gefahren werden, weil durch die Federeinrichtung 29 über einen gewissen Axialweg in Richtung der Mittelachse 27 eine Ausgleichbewegung der Eingriffseinrichtung 9, 11 möglich ist. Dadurch wird das Einrasten der Eingriffseinrichtung in den Montageabschnitt 87 des Werkzeugs 63 erleichtert.

Nach dem Zusammenkoppeln der Eingriffseinrichtung 9, 11 mit dem Montageabschnitt 87 wird das Werkzeug 63 so gedreht, dass die Rastscheibe 33 gegen den Uhrzeigersinn in Rotation versetzt wird, bis die erste Flanke 49 einer Rastnase 47 gegen den Rastbolzen 37 anschlägt. Bei einer weiteren Drehbewegung der Werkzeugaufnahme, beispielsweise eines Halters 101, eines Adapters oder eines Zwischenstücks, wird nun das Werkzeug 63 im Bereich der Kopplungsstelle 73 von dem entsprechenden Gegenstück, beispielsweise dem Halter, gelöst.

Die Ausgestaltung der Kopplungsstelle 73 ist dabei belanglos. Anstelle eines Gewindeansatzes 83 kann auch eine Bajonettverriegelung oder dergleichen vorgesehen werden.

Durch das Zusammenspiel zwischen Montageabschnitt 87 des Werkzeugs 63 und einer Eingriffseinrichtung 9, 11 ist es also möglich, ein Werkzeug 63 im Bereich seiner Kopplungsstelle 73 von einer Halterung, einem Adapter, einem Zwischenstück oder dergleichen zu lösen.

Grundsätzlich ist es auch denkbar, bei einer sicheren Verbindung zwischen Montageabschnitt 87 und Eingriffseinrichtung 9, 11 das Werkzeug an der Maschinenspindel zu lösen, zumindest dann, wenn hier eine automatische Spindel vorgesehen ist.

Vorzugsweise wird aber eine Kopplungsstelle 73 der hier angesprochenen Art realisiert, um ein Teilwerkzeug, nämlich das Werkzeug 63 von einem Halter oder dergleichen abzubauen.

Das demontierte Werkzeug 63 verbleibt im Aufnahmebereich, hier in der Ausnehmung 5, 7 der Wechselvorrichtung 1 und wird dort vorzugsweise von der oben erwähnten Sicherung gehalten, auch wenn nun die Wechselvorrichtung 1 aus dem Arbeitsbereich der Werkzeugmaschine entfernt wird.

In einem weiteren Schritt kann nun eine Wechselvorrichtung 1 mit einem in der mindestens einen Ausnehmung 5, 7 im Grundkörper 3 der Wechselvorrichtung 1 vorgesehenen neuen Werkzeug in den Arbeitsbereich der Werkzeugmaschine herangefahren werden. Das Werkzeug wird von der Eingriffseinrichtung 9, 11 über seinen Montageabschnitt 87, gegebenenfalls durch die Sicherung, gehalten. Die Werkzeugmaschine kann daher nun zur Kopplungsstelle 73 des Werkzeugs 63 verfahren werden, um hier eine sichere Verbindung herzustellen. Beispielsweise wird ein mit der Werkzeugmaschine verbundener Halter in Rotation versetzt, und zwar so, dass die Rastscheibe 33 gemäß der Darstellung in Figur 2 im Uhrzeigersinn gedreht wird. Durch die Zentrierhilfe 85 am Werkzeug 63 kann der Halter besonders leicht auf die Kopplungsstelle 73 aufgesetzt werden. Sobald dies geschehen ist, dreht sich die Spindel der Werkzeugmaschine, damit auch das der Kopplungsstelle 73 zugeordnete Gegenstück, das als Halter, Adapter oder Zwischenstück ausgebildet sein kann.

Der Gewindeansatz 83 wirkt nun mit einem Innengewinde im Gegenstück zusammen, so dass das Werkzeug in das Gegenstück, beispielsweise in einen Halter, eingeschraubt wird. Der im Bereich des Schafts 75 vorzugsweise vorgesehene Außenkegel hat ein geringes Übermaß zu einem im Gegenstück vorgesehenen Innenkegel, so dass es eines gewissen Drehmoments bedarf, um die Planfläche 81 mit einer zugehörigen Planfläche am Gegenstück anzulegen. Um das hierfür erforderliche Drehmoment einstellen zu können, dreht sich das Gegenstück so, dass gemäß Figur 2 die Rastscheibe 33 im Uhrzeigersinn gedreht wird, so dass der Rastbolzen 37 gegen die Kraft des Federelements 39 in die Ausnehmung 41 im Grundkörper 3 der Wechselvorrichtung 1 zurückverlagert werden kann und eine Drehung der Rastscheibe 33 ermöglicht ist. Die Rastscheibe 33 erfährt durch die Kupplung 23 ein Bremsmoment, so dass das Werkzeug 63 fest mit dem Gegenstück verschraubt wird, bis das gewünschte Anzugsmoment erreicht ist. Vorzugsweise ist die Kupplung 23 einstellbar, so dass unterschiedliche Drehmomente beim Einschrauben des Werkzeugs 63 in ein geeignetes Gegenstück eingestellt werden können.

Ist das gewünschte Drehmoment erreicht, dreht die Kupplung 23 durch, so dass das Werkzeug nicht zu fest angezogen werden kann.

Durch geeignete Sensoren im Bereich der Wechselvorrichtung 1 oder des Antriebs der Werkzeugmaschine kann zur Überwachung des Kopplungsvorgangs festgestellt werden, wann die Kupplung 23 durchdreht und damit eine Rotation des über die Eingriffseinrichtung 9, 11 und dem Montageabschnitt 87 gehaltenen Werkzeugs 63 möglich ist. Eine weitere Drehung der Spindel der Werkzeugmaschine wird nunmehr unterbunden. Durch eine Relativbewegung in Richtung der Mittelachse 27 wird nun das Werkzeug 63 aus der Ausnehmung 5, 7 herausgenommen und steht nun für die Bearbeitung eines Werkstücks zur Verfügung.

Es wird deutlich, dass die Wechselvorrichtung 1 auch dazu verwendet werden kann, Werkzeuge auszutauschen, die unmittelbar in der Spindel einer Werkzeugmaschine verankert sind, sofern diese eine automatische Werkzeugspannung aufweist. Außerdem kann ein Werkzeugwechsel nicht nur bei einem Verschleiß oder Defekt eines Werkzeugs durchgeführt werden, sondern auch dann, wenn für die Bearbeitung eines Werkstücks unterschiedliche Werkzeuge erforderlich sind. Bei einem Werkzeugwechsel kann die Wechselvorrichtung 1 ein Werkzeug in einem Aufnahmebereich, beispielsweise in einer Ausnehmung aufnehmen. Ein Ersatzwerkzeug kann von einer weiteren Wechselvorrichtung 1 bereitgestellt werden, so dass zunächst die erste Wechselvorrichtung entfernt und die neue Wechselvorrichtung herangefahren werden muss. Denkbar ist es aber auch, in einer Ausnehmung des Grundkörpers 3 der Wechselvorrichtung 1 ein Werkzeug aufzunehmen und in einer anderen Ausnehmung ein neues Werkzeug zur Verfügung zu stellen.

Aus den Erläuterungen wird deutlich, dass die Rastvorrichtung 31 so ausgebildet ist, dass bei der Demontage eines Werkzeugs ein höheres Brems-Drehmoment aufgebracht werden kann, als beim Montieren: Beim Lösen ist die Rastscheibe 33 über den Rastbolzen 37 quasi starr mit dem Grundkörper 3 der Wechselvorrichtung 1 verbunden, sobald die erste Flanke 49 an der Außenfläche des Rastbolzens 37 anschlägt.

Die Erläuterungen zu dem Verfahren zeigen, dass die Wechselvorrichtung 1 einen Austausch eines Werkzeugs in einem Verfahrensschritt ermöglicht, nämlich dann, wenn wenigstens zwei Ausnehmungen im Grundkörper der Wechselvorrichtung 1 vorgesehen sind, von denen eine das zu demontierende Werkzeug aufnimmt und die andere das Ersatzwerkzeug.

Das Verfahren zeichnet sich dadurch aus, dass ein Werkzeugwechsel auch bei einem Mehrspindelkopf oder bei einer Sonderbearbeitungsmaschine möglich ist. Die Wechselvorrichtung kann mit einzelnen Werkzeugen des Mehrspindelkopfs beziehungsweise der Sonderbearbeitungsmaschine zusammenwirken, um einzelne Werkzeuge auszutauschen. Auch können mehrere Werkzeuge sequenziell, also hintereinander, ausgetauscht werden.

Besonders vorteilhaft ist es, dass die Wechselvorrichtung 1 auch so ausgebildet werden kann, dass in deren Grundkörper 3 mehrere Aufnahmebereiche vorgesehen und diese so angeordnet sind, dass deren Anordnung der Anordnung der Werkzeuge im Mehrspindelkopf beziehungsweise in der Sonderbearbeitungsmaschine entspricht. In einem einzigen Bearbeitungsgang können also auch sämtliche Werkzeuge eines Mehrspindelkopfs beziehungsweise einer Sonderbearbeitungsmaschine abgenommen und ersetzt werden. Hierzu können zwei verschiedene Wechselvorrichtungen nacheinander eingesetzt werden. Denkbar ist es aber auch, zwei Gruppen von Aufnahmebereichen in einer Wechselvorrichtung vorzusehen und in der ersten Gruppe der Ausnehmungen die auszutauschenden Werkzeuge aufzunehmen und mit Hilfe der zweiten Gruppe die Ersatzwerkzeuge bereitzustellen.

Bei einem Werkzeugwechsel ist es möglich, eine ein Werkzeug aufnehmende Spindel einer Werkzeugmaschine gegenüber einer feststehenden Wechselvorrichtung 1 zu bewegen, oder aber diese gegenüber einer oder mehreren feststehenden Spindeln zu bewegen, beispielsweise bei einem Werkzeugwechsel einer Sonderbearbeitungsmaschine.

Das Verfahren kann auch in Zusammenhang mit einer Transferlinie 91 oder einer Rundtaktmaschine eingesetzt werden: Bei Verschleiß oder Defekt eines Werkzeugs wird eine Wechselvorrichtung anstelle eines Werkstücks 97 in den Bearbeitungsvorgang eingeschleust, also auf die Fördereinrichtung 99 aufgesetzt. Durch eine entsprechende Kodierung der Wechselvorrichtung 1 wird sichergestellt, dass an der Bearbeitungsstation, an der ein Werkzeugwechsel durchgeführt werden soll, das auszutauschende Werkzeug an die Wechselvorrichtung 1 übergeben wird. Eine nachfolgende Wechselvorrichtung 1, die ebenfalls in den Bearbeitungsvorgang eingeschleust wird, liefert das Ersatzwerkzeug, das - wie oben beschrieben - das demontierte Werkzeug ersetzt.

Es ist damit möglich, in laufende Bearbeitungsvorgänge Wechselvorrichtungen 1 einzubringen, um beispielsweise nach einem vorgegebenen Bearbeitungszyklus ein Werkzeug auszutauschen, bevor der Verschleiß gewisse Toleranzgrenzen überschreitet.

Bestehende Bearbeitungszentren können durch die hier beschriebene Werkzeugwechseleinrichtung beziehungsweise durch das hier erläuterte Verfahren erweitert werden: Es ist nicht zwingend erforderlich, alle erdenklichen Werkzeuge in einem Werkzeugmagazin unterzubringen. Denkbar ist es auch, zusätzliche Werkzeuge mittels einer Wechselvorrichtung 1 in den Arbeitsbereich des Bearbeitungszentrums zu verlagern, beispielsweise in den Arbeitsraum dieser Maschine. Dort kann dann auf die hier beschriebene Weise ein Werkzeugwechsel vorgenommen werden.

Es ist damit möglich, zusätzliche Werkzeuge bei einem Bearbeitungsverfahren einzusetzen oder eine größere Anzahl von Werkstücken für den Fall eines Werkzeugverschleißes oder -ausfalls bereitzustellen und einen automatischen Werkzeugwechsel durchzuführen.

Es ist offensichtlich, dass die Werkzeugwechseleinrichtung dabei sehr flexibel ist, weil die Wechselvorrichtung 1 an die unterschiedlichsten Anwendungsfälle angepasst werden kann. Es ist möglich, Eingriffseinrichtungen so abzuwandeln, dass diese mit einer Vielzahl von Montageabschnitten von Werkzeugen zusammenwirken können und somit einen automatischen Werkzeugwechsel ermöglichen.

Ohne weiteres können bestehende Werkzeugmaschinen mit der hier beschriebenen Werkzeugwechseleinrichtung nachgerüstet werden. Auch kann das erläuterte Verfahren mit herkömmlichen Maschinen durchgeführt werden, wobei ganze Werkzeuge austauschbar sind, wenn die Werkzeugmaschine eine automatische Spindel aufweist, die gezielt aktiviert und deaktiviert werden kann. Besonders bevorzugtes Einsatzgebiet ist aber, lediglich Werkzeugköpfe auszutauschen und damit eine sehr hohe Bearbeitungsflexibilität bei minimalem Raumbedarf zu realisieren.

Bei der automatisierten Bearbeitung von Werkstücken können dezentral Werkzeuge in Wechselvorrichtungen 1 bereitgestellt und einem Bearbeitungsprozess zugeführt werden. Dies führt dazu, dass Bearbeitungsbereiche sehr kompakt aufgebaut werden können.

Schließlich wird auch deutlich, dass auch bei so genannten Pick-up-Systemen die Verwendung der hier beschriebenen Wechselvorrichtung 1 möglich ist. Durch einen Roboter werden Werkstücke in den Arbeitsbereich einer Werkzeugmaschine, beispielsweise in den Arbeitsraum des Bearbeitungszentrums, verlagert. Bei einem Werkzeugwechsel wird anstelle eines Werkzeugs eine Wechselvorrichtung 1 in den Arbeitsraum gebracht, so dass ein automatisches Wechseln von Werkzeugen und Teilwerkzeugen möglich ist.

Besonders vorteilhaft ist der Einsatz der hier beschriebenen Werkzeugwechseleinrichtung bei Transferlinien, Rundtaktmaschinen und Sonderbearbeitungsmaschinen, weil ein Werkzeugwechsel auch ohne Stilllegung des gesamten Bearbeitungssystems erfolgen kann, zumindest dann, wenn routinemäßig aufgrund von Verschleiß oder unterschiedlichen Bearbeitungskonzepten Werkzeuge ausgetauscht werden müssen.

Aus den Erläuterungen wird deutlich, dass es besonders vorteilhaft ist, die für die Werkzeugwechseleinrichtung und das Verfahren verwendeten Werkzeuge speziell abzustimmen darauf, dass ein automatischer Werkzeugwechsel erfolgen soll. Beispielsweise ist es besonders vorteilhaft, bei Werkzeugen 63 mit einer Kopplungsstelle 73, die einen Gewindeansatz 83 umfasst, eine Zentrierhilfe 85 vorzusehen, die auf einfache Weise durch einen Zentriereinsatz realisierbar ist. Dadurch kann ohne weiteres ein Gegenstück, insbesondere ein Halter oder dergleichen, auf die Kopplungsstelle 73 eines Werkzeugs 63 aufgesetzt werden.

Da die Eingriffseinrichtung 9, 11 sehr variabel ausgebildet werden kann, ist es ohne weiteres möglich, bestehende Bearbeitungssysteme mit einem oder mehreren Werkzeugen mit Hilfe der hier beschriebenen Wechselvorrichtung 1 auszurüsten und damit ein Werkzeugwechseleinrichtung zu realisieren, das die hier beschriebenen Vorteile aufweist.

Aus der Beschreibung der Werkzeugwechseleinrichtung und des Verfahrens wird deutlich, dass die Wechselvorrichtung 1 besonders vorteilhaft mit einem Halter 101 verwendet werden kann. Bei einem Werkzeugwechsel ist es nicht erforderlich, die komplette Werkzeugeinrichtung mit Halter und Werkzeug auszutauschen. Vielmehr ist es möglich, lediglich einen Teil einer mehrteiligen Werkzeugeinrichtung, beispielsweise einen Schneidkopf, also das Werkzeug 63, zu wechseln. Dabei ergibt sich ein sehr geringer Raumbedarf, weil eben nicht die Komplette Werkzeugeinrichtung sondern eben nur das Werkzeug 63 ausgetauscht wird, während der zugehörige Halter 101 in der Werkzeugspindel verbleibt.

In Zusammenhang mit einem Mehrspindelkopf und einer Sonderbearbeitungsmaschine ist es möglich, bei einer Wechselvorrichtung Aufnahmebereiche vorzusehen, die entsprechend den Spindeln des Mehrspindelkopfs beziehungsweise der Sonderbearbeitungsmaschine angeordnet sind. Dadurch können bei einem einzigen Wechselvorgang alle Werkzeuge des Mehrspindelkopfs beziehungsweise der Sonderbearbeitungsmaschine demontiert und ausgetauscht werden.

Aus den vorangegangenen Erläuterungen wird deutlich, dass die Werkzeugwechseleinrichtung auf einfache und kostengünstige Weise einen Werkzeugwechsel ermöglicht, der nicht nur bei Verschleiß eines Werkzeugs sondern bei einer gewünschten Änderung der Bearbeitungsweise eines Werkstücks durchgeführt werden kann. Dabei ist es möglich, die ausgetauschten und einzuwechselnden Werkzeuge außerhalb des unmittelbaren Bearbeitungsbereichs unterzubringen, also auf Magazine und dergleichen zu verzichten. Dies führt zu einer sehr kompakten Bauweise von Werkzeugmaschinen, sei es von solchen die in Zusammenhang mit Transferstrecken eingesetzt werden oder von solchen, die in Zusammenhang mit Bearbeitungszentren Verwendung finden. Die kompakte Bauweise resultiert daraus, dass die Werkzeugmaschine kein Magazin mehr aufzuweisen braucht. Es ist also nicht erforderlich, in unmittelbarer Nähe, wie dies bei herkömmlichen Anlagen üblich ist, ein Magazin für Werkzeuge vorzusehen, die bei Verschleiß oder Beschädigung eines Werkzeugs oder aber bei unterschiedlichen Bearbeitungsschritten dort entnommen und der Werkzeugmaschine bereitgestellt werden können.

Es zeigt sich überdies, dass die Werkzeugwechseleinrichtung auch für den Austausch schwerer Werkzeuge einsetzbar ist. Diese können ohne weiteres von der Wechselvorrichtung der Werkzeugwechseleinrichtung aufgenommen und der Werkzeugmaschine zur Verfügung gestellt und dann an einem geeigneten Ort zur Lagerung abgelegt werden. Dabei kann auf Halter, die bei herkömmlichen Werkzeugmaschinen an die Werkstückaufnahme der Werkzeugmaschine angebracht werden, verzichtet werden. Es kann vielmehr die gesamte Werkstückaufnahme ausgenutzt werden, indem dort eine Wechselvorrichtung angeordnet ist, die mindestens so groß sein kann, wie das zu bearbeitende Werkstück. Die hier als Werkzeug-Dummy eingesetzte Wechselvorrichtung kann also größer sein als die oben angesprochenen bekannten Halter oder die bearbeiteten Werkstücke und daher schwere Werkzeuge besser handhaben.

Die Werkzeugwechseleinrichtung der hier angesprochenen Art ermöglicht einen Werkzeugwechsel, ohne dass es irgendwelcher Montagearbeiten an der Werkzeugmaschine bedürfte. Es ist also nicht erforderlich, an die zu bearbeitenden werkstückehaltenden Aufnahmeeinrichtungen irgendwelche Halterungen anzubringen, die die auszutauschenden Werkzeuge bereitstellen und/oder auszutauschende Werkzeuge halten und abtransportieren.

Entscheidend ist, dass die Werkzeugwechseleinrichtung eine Wechselvorrichtung 1 aufweist, die wie ein Werkstück der Werkzeugmaschine zugeführt wird, aber eben nicht, um wie ein Werkstück einer Bearbeitung unterzogen zu werden, sondern um ein auszutauschendes Werkzeug aufzunehmen und/oder ein Austauschwerkzeug bereitzustellen. Daher wird die Wechselvorrichtung 1 als auch Werkstück-Dummy bezeichnet.

Die Wechselvorrichtung 1 wird dabei unmittelbar wie ein Werkstück von einer Transferlinie gemäß Figur 5, von einem auch als Pickup-Einrichtung bezeichneten Roboter 119 gemäß Figur 7 oder von einem Maschinentisch 135 gemäß Figur 8 aufgenommen. Dabei kann die Wechselvorrichtung 1 unmittelbar wie ein Werkstück aufgenommen werden, oder aber in eine Zwischenhalterung, Palette oder dergleichen eingesetzt und dann wie ein der Bearbeitung zuzuführendes Werkstück gehalten werden.

Es zeigt sich also, dass die Werkzeugwechselvorrichtung genauso exakt positioniert gehalten wird, wie dies bei Werkstücken der Fall ist. Dazu kann die Wechselvorrichtung 1 auch mit entsprechenden Ausricht- und/oder Positioniereinrichtungen versehen werden, wie dies bei Werkstücken, Paletten, Halterungen oder dergleichen der Fall ist.

Auf diese Weise ist sichergestellt, dass die Wechselvorrichtung 1 das auszutauschende Werkzeug exakt und problemlos aufnehmen kann, andererseits das auszutauschende Werkzeug ebenfalls exakt positioniert und ausgerichtet an die Werkzeugmaschine übergeben kann. Zur Erleichterung der Kopplung zwischen dem auszutauschenden Werkzeug und der Werkzeugmaschine können Zentrierhilfen 85 am Werkzeug 63 vorgesehen werden.

Dies alles gilt sowohl für Wechselvorrichtungen 1, die lediglich dazu dienen, ein auszutauschendes Werkzeug aufzunehmen und abzuführen oder ein neues Werkzeug bereitzustellen, als auch für Wechselvorrichtungen 1, die eine erste Ausnehmung zur Aufnahme des auszutauschenden Werkzeugs und eine zweite Ausnehmung zur Bereitstellung des neuen Werkzeugs aufweisen.

Diese Besonderheiten ergeben sich ohne Weiteres aus de Tatsache, dass die Wechselvorrichtung 1 eben als Werkzeug-Dummy einer Werkzeugmaschine zugeführt wird. Es bedarf daher also keiner zusätzlichen Halterungen die an Werkzeugtischen oder dergleichen anzubringen sind. Der Aufbau einer Werkzeugmaschine ändert sich nicht, weil alle Aufnahmeeinrichtungen zur Aufnahme eines Werkstücks dazu verwendet werden können, den Werkzeug-Dummy, also die Wechselvorrichtung 1 aufzunehmen und einer Maschinenspindel oder dergleichen zuzuführen. Dies gilt also auch für die Fälle, in denen ein Halter 101 in einer Werkzeugspindel verbleibt und lediglich ein von dem Halter 101 erfasstes Werkzeug 63 ausgetauscht wird.

Dadurch entfallen also Montagearbeiten an Halterungen für Werkstücke, was einen Werkzeugwechsel sehr einfach macht.

Da, wie oben im Einzelnen in Zusammenhang mit Figur 8 erläutert, auch Wechselvorrichtungen 1 mit mehreren Ausnehmungen eingesetzt werden können, können in einem einzigen Arbeitsschritt auch mehrere Werkzeuge ausgetauscht werden, wie sie an den Wänden 127 und 129 einer Sonderbearbeitungsmaschine 123 vorgesehen sind. An der Wechselvorrichtung 1 sind in diesem Fall Ausnehmungen vorgesehen, die komplementär angeordnet und ausgebildet sind, wie die in den Wänden einer Sonderbearbeitungsmaschine angeordneten Werkzeuge. Dies führt zu einem besonders einfachen und raschen Werkzeugwechsel bei derartigen Maschinen.

Da auch hier die Wechselvorrichtung 1 wie ein Werkstück auf dem beweglichen Maschinentisch 135 angeordnet ist, kann, wie bei den anderen Werkzeugmaschinen der oben beschriebenen Art, auf besondere Steuerungen der Maschinen verzichtet werden: Ohnehin ist vorgesehen, dass das Werkstück zum Werkzeug oder das Werkzeug zum Werkstück bewegt werden kann. Entsprechend ist es also auf einfache Weise möglich, die Wechselvorrichtung 1 zum Werkzeug oder das Werkzeug zur Wechselvorrichtung 1 zu bewegen um einen Austausch vorzunehmen, gegebenenfalls, wie in Zusammenhang mit der Sonderbearbeitungsmaschine 123 beschrieben, auch in einem Bearbeitungsgang mehrere Werkzeuge auszutauschen.

Da der Einsatz der Wechselvorrichtung 1 anstelle eines Werkstücks erfolgt, ist die Wechselvorrichtung stets, wie eben ein Werkstück, exakt zu den Halterungen der Werkzeuge ausgerichtet, sodass diese problemlos in der mindestens einen Ausnehmung einer Wechselvorrichtung 1 abgelegt werden können. Entsprechend problemlos können aus der Wechselvorrichtung 1 ein oder mehrere Austauschwerkzeuge aufgenommen werden.

Aus den Erläuterungen zu der Werkzeugwechseleinrichtung, zum Verfahren zum Wechseln mindestens eines Werkzeugs, zu dem Werkzeug 63 und zu den Figuren 7 und 8 wird deutlich, dass mit Hilfe der hier beschriebenen Werkzeugwechseleinrichtung eine Werkzeugmaschine besonders vorteilhaft realisierbar ist. Diese weist mindestens eine der Aufnahme eines Werkzeugs dienende Werkzeugspindel auf, außerdem wenigstens ein der Bearbeitung eines Werkstücks dienendes Werkzeug sowie eine Werkstückaufnahme, die das zu bearbeitende Werkstück unmittelbar oder mittels einer Palette, einer Zwischenhalterung oder dergleichen aufnimmt. Die Werkzeugmaschine ist so ausgelegt, dass die Werkstückaufnahme und/oder die Werkzeugspindel beweglich ausgebildet sind, so dass zur Bearbeitung eines Werkstücks eine Relativbewegung zwischen dem von der Werkstückaufnahme gehaltenen Werkstück und dem von der Werkzeugspindel gehaltenen Werkzeug ermöglicht wird. Dabei ist es also insbesondere möglich, das Werkstück bei der Bearbeitung unbeweglich festzuhalten und lediglich das Werkzeug in Richtung seiner Drehachse und in senkrechten Richtungen dazu zu verlagern. Umgekehrt kann auch das Werkzeug so festgehalten werden, dass es ausschließlich eine Rotationsbewegung und allenfalls noch eine Translationsbewegung in Richtung der Drehachse des Werkzeugs durchführt. Das Werkstück wird von einer Werkstückaufnahme gehalten und so bewegt, dass die gewünschten Bearbeitungsschritte durchführbar sind.

Die Besonderheit der Werkzeugmaschine beruht darin, dass mittels der Werkzeugwechseleinrichtung ein Werkzeugwechsel auf einfache Weise durchführbar ist: Anstelle eines Werkstücks wird die Wechselvorrichtung von der Werkstückaufnahme erfasst und bereitgestellt. Die Werkstückaufnahme ist so ausgebildet, dass ein Werkstück exakt gegenüber dem mindestens einen Werkzeug der Werkzeugmaschine ausgerichtet ist. Es ist nun möglich, mittels der Werkstückaufnahme die Wechselvorrichtung ebenfalls exakt ausgerichtet zu erfassen. Durch eine Relativbewegung zwischen Wechselvorrichtung und Werkzeugspindel kann ein Werkzeug von der Wechselvorrichtung aufgenommen und ein anderes Werkzeug exakt erfasst werden. Dabei zeigt sich, dass die Werkzeugmaschine nur die zur Durchführung einer Werkstückbearbeitung erforderlichen Bewegungen ausführen können muss. Es bedarf also für den automatischen Werkzeugwechsel keiner besonderen Einrichtungen, die einerseits Platz brauchen oder die Kosten für die Werkzeugmaschine erhöhen.

Aus den Erläuterungen zu den Figuren 7 und 8 wird deutlich, dass die Werkzeugmaschine als Bearbeitungszentrum 107 oder als Sonderbearbeitungsmaschine 123 ausgebildet sein kann. Im ersteren Fall weist sie einen Bearbeitungsbereich, vorzugsweise einen Arbeitsraum 109 auf, in den ein zu bearbeitendes Werkstück eingebracht werden kann. Es wird dort von einer Werkzeugaufnahme gehalten und von einem in eine Werkzeugspindel 111 eingesetzten Werkzeug bearbeitet. Es bedarf nach dem oben Gesagten keiner besonderen Maßnahmen, wenn nun anstelle des Werkstücks eine Wechselvorrichtung in den Arbeitsraum eingebracht wird. Es ist auf einfache Weise möglich, durch die erwähnte Relativbewegung zwischen der Werkzeugspindel und der Werkzeugaufnahme ein Werkzeug auszutauschen und durch ein neues zu ersetzen, wobei ein Austausch auf eine Beschädigung oder auf Verschleiß beruhen kann, oder darauf, dass ein anderer Werkzeugtyp für einen anderen Bearbeitungsvorgang gebraucht wird.

Es zeigt sich überdies, dass die Werkzeugmaschine auch dann ohne weiteres einsetzbar ist, wenn in der Werkzeugspindel ein Halter 101 eingesetzt und an diesem lediglich Werkzeuge 63 ausgetauscht werden sollen.

Durch die herkömmliche Transporteinrichtung 113, die die zu bearbeitenden Werkstücke dem Bearbeitungszentrum 107 zuführt, kann auch eine Wechselvorrichtung 1 bereit gestellt werden, um einen Werkzeugwechsel durchzuführen.

Entsprechendes gilt für die als Sonderbearbeitungsmaschine 123 ausgestaltete Werkzeugmaschine, die in Figur 8 dargestellt ist. Sie weist einen Arbeitsraum 125 auf, der von Wänden 127, 129 begrenzt ist, wobei diese eine Anzahl von Werkzeugspindeln umfasst. Mittels eines Maschinentischs 135 werden die Werkstücke den Werkzeugspindeln zugeführt, die an den Wänden vorgesehen sind.

Die Besonderheit besteht hier darin, dass der übliche, oben beschriebene Werkzeugwechsel mittels einer Wechselvorrichtung 1 durchführbar ist, mit der jeweils ein Werkzeug austauschbar ist. Es ist aber auch möglich, die Wechselvorrichtung 1 so auszubilden, dass diese Ausnehmungen aufweist, die genau so angeordnet sind, wie Gruppen von Werkzeugen, die an den Wänden des Arbeitsraums vorgesehen sind. Damit ist es möglich, mit einer Wechselvorrichtung in einem einzigen Bearbeitungsschritt mehrere Werkzeuge auszutauschen. Dies verkürzt die Wechselzeiten wesentlich. Es wird dabei deutlich, dass die in der Wechselvorrichtung 1 vorgesehenen Ausnehmungen zur Aufnahme von Werkzeugen praktisch beliebig angeordnet werden und damit an unterschiedliche Anordnungen von Werkzeugen in den Wänden eines Arbeitsraums anpassbar sind. Die Wechselvorrichtung kann also sehr flexibel abgewandelt und eingesetzt werden.

## Patentansprüche

1. Verfahren zum Wechseln mindestens eines Werkzeugs, mit folgenden Schritten :
- eine Wechselvorrichtung (1) wird von einer Werkstückaufnahme einer Werkzeugmaschine wie ein Werkstück erfasst und bereitgestellt,
- die Wechselvorrichtung (1) wird in den Arbeitsbereich der Werkzeugmaschine wie ein Werkstück oder die Werkzeugmaschine wird zur Wechselvorrichtung (1) wie zu einem Werkstück verlagert,
- es wird eine Relativbewegung zwischen einem Werkzeug (63) und der Wechselvorrichtung (1) bewirkt,
- das zu tauschende Werkzeug (63) wird in einen Aufnahmebereich (5,7) im Grundkörper (3) der Wechselvorrichtung (1) eingeführt und dort abgelegt,
- Bereitstellung eines neuen Werkzeugs mittels einer Wechselvorrichtung (1) und
- Erfassung des neuen Werkzeugs, wobei
- zur Durchführung des Werkzeugwechsels ausschließlich für die Bearbeitung von Werkstücken erforderliche Freiheitsgrade beziehungsweise Bewegungen der Werkzeugmaschine ausgenutzt werden, die in der Lage ist, ein Werkzeug mit einem Werkstück in Eingriff zu bringen, um eine Bearbeitung vorzunehmen.

2. Verfahren nach Anspruch 1, **dadurch gekennzeichnet, dass** die Wechselvorrichtung (1) im Arbeitsbereich verbleibt.

3. Verfahren nach Anspruch 1, **dadurch gekennzeichnet, dass** die Wechselvorrichtung (1) aus dem Arbeitsbereich herausgefahren wird.

4. Verfahren nach einem der Ansprüche 1 bis 3, **dadurch gekennzeichnet, dass** verschiedene Wechselvorrichtungen (1) zum Aufnehmen des auszutauschenden Werkzeugs (63) und zum Bereitstellen eines anderen Werkzeugs eingesetzt werden.

5. Verfahren nach einem der Ansprüche 1 bis 4, **dadurch gekennzeichnet, dass** bei einem Wechsel mehrere Werkzeuge (63) eines Mehrspindelkopfs oder einer Sonderbearbeitungsmaschine ausgetauscht werden.

6. Verfahren nach einem der Ansprüche 1 bis 5, **dadurch gekennzeichnet, dass** die Wechselvorrichtung (1) in einer Transferlinie (91) und/oder einer Rundtaktmaschine verwendet wird.

7. Verfahren nach einem der Ansprüche 1 bis 6, **dadurch gekennzeichnet, dass** eine Aufnahme der Werkzeugmaschine das Werkzeug (63) automatisch spannt

8. Werkzeugwechseleinrichtung für mindestens ein eine Kopplungsstelle aufweisendes Werkzeug (63), die eine einen automatischen Werkzeugwechsel gemäß dem Verfahren nach einem der Ansprüche 1 bis 7 ermöglichende Wechselvorrichtung (1) aufweist, **dadurch gekennzeichnet, dass** die Wechselvorrichtung (1) anstelle eines Werkstücks (97) einsetzbar ist und mindestens eine Eingriffseinrichtung (9,11) zur drehfesten Erfassung des mindestens einen Werkzeugs (63), eine Kupplung (23), sowie eine Rastvorrichtung (31) aufweist, wobei die um eine Achse (21) drehbare Eingriffseinrichtung (9,11) mit der Kupplung (23) gekoppelt ist, und wobei die Rastvorrichtung (31) die freie Drehbarkeit der Eingriffseinrichtung (9,11) um eine Achse (21) in einer Richtung ermöglicht und in entgegengesetzter Richtung verhindert.

9. Werkzeugwechseleinrichtung nach Anspruch 8, **dadurch gekennzeichnet, dass** die Eingriffseinrichtung (9,11) einen Außenmehrkant, Innenmehrkant und/oder mindestens einen Stift (15,17) aufweist.

10. Werkzeugwechseleinrichtung nach einem der Ansprüche 8 oder 9, **dadurch gekennzeichnet, dass** die Eingriffseinrichtung (9,11) eine Federeinrichtung (29) aufweist.

11. Werkzeugwechseleinrichtung nach einem der Ansprüche 8 bis 10, **dadurch gekennzeichnet, dass** die Eingriffseinrichtung (9,11) eine Sicherung aufweist.

12. Werkzeugwechseleinrichtung nach einem der Ansprüche 8 bis 11, **dadurch gekennzeichnet, dass** die Kupplung (23) einstellbar ist.

13. Werkzeugwechseleinrichtung nach einem der Ansprüche 8 bis 12, **dadurch gekennzeichnet, dass** mindestens ein der Funktionsüberwachung dienender Sensor vorgesehen ist.

14. Werkzeugwechseleinrichtung nach einem der Ansprüche 8 bis 13, **dadurch gekennzeichnet, dass** die Wechselvorrichtung (1) mehrere Ausnehmungen (5,7) für Werkzeuge (63) aufweist, deren Anordnung der Anordnung von Werkzeugen in einem Mehrspindelkopf oder der Anordnung von Werkzeugen in einer Sonderbearbeitungsmaschine entspricht.

15. Werkzeug zur Verwendung in einer Werkzeugwechseleinrichtung nach einem der Ansprüche 8 bis 14 und/oder zur Verwendung bei einem Verfahren zum Wechseln mindestens eines Werkzeugs nach einem der Ansprüche 1 bis 7, mit einer Kopplungsstelle (73), über die das Werkzeug (63) mit einer Spindel einer Werkzeugmaschine verbindbar ist, wobei die Kopplungsstelle (73) einen zur Befestigung des Werkzeuges (63) dienenden Gewindeansatz (83) und eine Zentrierhilfe (85) aufweist, **dadurch gekennzeichnet, dass** die Zentrierhilfe (85) - in Eindringrichtung des Gewindeansatzes (83) in ein zugehöriges Innengewinde gesehen - vor dem Gewindeansatz (83) angeordnet ist, und dass ein Montageabschnitt (87) zur drehfesten Kopplung mit einer Eingriffseinrichtung (9,11) einer Wechselvorrichtung (1) einer Werkzeugwechseleinrichtung gemäß einem der Ansprüche 8 bis 14 vorgesehen ist.

16. Werkzeug nach Anspruch 15, **dadurch gekennzeichnet, dass** als Zentrierhilfe (85) ein Ansatz vorgesehen ist, dessen Außendurchmesser kleiner als der des Gewindeansatzes (83).

17. Werkzeug nach Anspruch 15 oder 16, **dadurch gekennzeichnet, dass** auf der der Zentrierhilfe (85) abgewandten Seite des Gewindeansatzes (83) ein als sich ausgehend von einer Vorderseite (77) des Werkzeugs in Richtung auf den Gewindeansatz (83) verjüngender Außenkegel ausgebildeter Schaft (75) vorgesehen ist.

18. Werkzeug nach Anspruch 17, **dadurch gekennzeichnet, dass** der Außendurchmesser des Gewindeansatzes (83) kleiner ist als der kleinste Außendurchmesser des Schafts (75).

19. Werkzeug nach einem der Ansprüche 15 bis 18, **dadurch gekennzeichnet, dass** der Montageabschnitt (87) einen Innenmehrkant, einen Außenmehrkant und/oder eine Ausnehmung für mindestens einen Stift aufweist.

20. Werkzeug nach einem der vorhergehenden Ansprüche, **dadurch gekennzeichnet dass** das Werkzeug (63) als Wechselkopf ausgelegt ist.

21. Werkzeug nach einem der vorhergehenden Ansprüche, **dadurch gekennzeichnet, dass** das Werkzeug (63) außer dem Schaft (75) eine zur axialen Ausrichtung dienende Planfläche (81) aufweist.

22. Werkzeugmaschine mit
- mindestens einer der Aufnahme eines Werkzeugs dienenden Werkzeugspindel (111),
- wenigstens einem der Bearbeitung eines Werkstücks (115) dienenden Werkzeug (63),
- einer Werkstückaufnahme, die das zu bearbeitende Werkstück (115) unmittelbar oder mittels einer Palette, einer Zwischenhalterung oder dergleichen aufnimmt,
- wobei die Werkstückaufnahme und/oder die Werkzeugspindel (111) beweglich ausgebildet sind, so dass zur Bearbeitung eines Werkstücks (115) eine Relativbewegung zwischen dem von der Werkstückaufnahme gehaltenen Werkstück (115) und dem von der Werkzeugspindel (111) gehaltenen Werkzeug (63) ermöglicht wird,
**gekennzeichnet durch** eine Werkzeugwechseleinrichtung nach einem der Ansprüche 8 bis 14, mit einer Wechselvorrichtung (1), die für einen Werkzeugwechsel anstelle eines Werkstücks (115) von der Werkstückaufnahme erfassbar ist.

23. Werkzeugmaschine nach Anspruch 22, **dadurch gekennzeichnet, dass** sie als Bearbeitungszentrum (107) ausgebildet ist.

24. Werkzeugmaschine nach Anspruch 23, **dadurch gekennzeichnet, dass** das Bearbeitungszentrum (107) einen Bearbeitungsbereich, vorzugsweise einen Arbeitsraum (109) aufweist, in dem das Werkstück (115) bearbeitet und in den die Wechselvorrichtung (1) einbringbar ist.

25. Werkzeugmaschine nach einem der vorhergehenden Ansprüche, **dadurch gekennzeichnet, dass** das Werkzeug (63) über einen Halter (101) an die Werkzeugspindel (111) angekoppelt wird.

26. Werkzeugmaschine nach einem der vorhergehenden Ansprüche, **gekennzeichnet durch** eine Transporteinrichtung (113) für die zu bearbeitenden Werkstücke (115).

27. Werkzeugmaschine nach Anspruch 26, **dadurch gekennzeichnet, dass** die Wechselvorrichtung (1) von der Transporteinrichtung (113) aufnehmbar ist

28. Werkzeugmaschine nach Anspruch 22, **dadurch gekennzeichnet, dass** sie als Sonderbearbeitungsmaschine (123) ausgebildet ist.

29. Werkzeugmaschine nach Anspruch 28, **gekennzeichnet durch** einen Arbeitsraum (125), der von Wänden (127,129) begrenzbar ist.

30. Werkzeugmaschine nach Anspruch 28 oder 29, **gekennzeichnet durch** eine Anzahl von Werkzeugspindeln (131), die der Aufnahme von Werkzeugen (133) dienen.

31. Werkzeugmaschine nach einem der vorhergehenden Ansprüche 28 bis 30, **gekennzeichnet durch** einen Maschinentisch (135) zur Aufnahme von Werkstücken (137) und gegebenenfalls einer Wechselvorrichtung (1).

32. Werkzeugmaschine nach einem der vorhergehenden Ansprüche 28 bis 31, **dadurch gekennzeichnet dass** die Wechselvorrichtung (1) so ausgebildet ist, dass sie Aufnahmen für Werkzeuge aufweist, die bezüglich an den Wänden (127,129) angeordneten Werkzeugen (133) komplementär angeordnet sind.

## Claims

1. A method for changing at least one tool comprising the following steps:
- a changing device (1) is gripped and provided by a workpiece accommodation of a machine tool in the same manner as a workpiece,
- the changing device (1) is displaced into the workspace of the machine tool in the same manner as a workpiece or the machine tool is displaced relative to the changing device (1) in the same manner as to a workpiece,
- a relative movement between a tool (63) and the changing device (1) is effected,
- the tool (63), which is to be exchanged, is inserted into an accommodating area (5, 7) in the base body (3) of the changing device (1) and is deposited there,
- providing a new tool by means of a changing device (1) and
- gripping the new tool, wherein
- only variances or movements, respectively, of the machine tool, which is able to bring a tool into engagement with a workpiece so as to carry out a processing, which are required for carrying out the tool change for the processing of workpieces, are used.

2. The method according to claim 1, **characterized in that** the changing device (1) remains in the workspace.

3. The method according to claim 1, **characterized in that** the changing device (1) is moved out of the workspace.

4. The method according to any one of claims 1 to 3, **characterized in that** different changing devices (1) are used for accommodating the tool (63), which is to be exchanged, and for providing another tool.

5. The method according to any one of claims 1 to 4, **characterized in that** a plurality of tools (63) of a multi-spindle head or of a special processing machine is exchanged during a change.

6. The method according to any one of claims 1 to 5, **characterized in that** the changing device (1) is used in a transfer line (91) and/or in a revolving transfer machine.

7. The method according to any one of claims 1 to 6, **characterized in that** an accommodation of the machine tool automatically tightens the tool (63).

8. A tool changing device for at least one tool (63), which comprises a coupling location, which comprises a changing device (1), which provides for an automatic tool change according to the method according to any one of claims 1 to 7, **characterized in that** the changing device (1) can be inserted instead of a workpiece (97) and comprises at least one engagement device (9, 11) for the torque-proof gripping of the at least one tool (63), a coupling (23) as well as a snap-in locking device (31), wherein the engagement device (9, 11), which can be rotated about an axis (21), is coupled to the coupling (23) and wherein the snap-in locking device (31) provides for the free rotatability of the engagement device (9, 11) about an axis (21) in one direction and prevents it in opposite direction.

9. The tool changing device according to claim 8, **characterized in that** the engagement device (9, 11) comprises an outer polygon, inner polygon and/or at least one pin (15, 17).

10. The tool changing device according to any one of claims 8 or 9, **characterized in that** the engagement device (9, 11) comprises a spring device (29).

11. The tool changing device according to any one of claims 8 to 10, **characterized in that** the engagement device (9, 11) comprises a safety mechanism.

12. The tool changing device according to any one of claims 8 to 11, **characterized in that** the coupling (23) can be adjusted.

13. The tool changing device according to any one of claims 8 to 12, **characterized in that** provision is made for at least one sensor, which serves to monitor the function.

14. The tool changing device according to any one of claims 8 to 13, **characterized in that** the changing device (1) comprises a plurality of recesses (5, 7) for tools (63), the arrangement of which corresponds to the arrangement of tools in a multi-spindle head or to the arrangement of tools in a special processing machine.

15. A tool to be used in a tool changing device according to any one of claims 8 to 14 and/or to be used in the case of a method for changing at least one tool according to any one of claims 1 to 7, comprising a coupling location (73), via which the tool (63) can be connected to a spindle of a machine tool, wherein the coupling location (73) comprises a threaded projection (83), which serves to fasten the tool (63), and a centering aid (85), **characterized in that** the centering aid (85) - viewed in penetration direction of the threaded projection (83) into a corresponding internal thread - is arranged in front of the threaded projection (83) and provision is made for an assembly section (87) for the torque-proof coupling to an engagement device (9, 11) of a changing device (1) of a tool changing device according to any one of claims 8 to 14.

16. The tool according to claim 15, **characterized in that** a projection is provided as centering aid (85), the outer diameter of which is smaller than that of the threaded projection (83).

17. The tool according to claim 15 or 16, **characterized in that** provision is made on the side of the threaded projection (83), which faces away from the centering aid (85), for a shank (75), which is embodied as an external taper, which tapers in the direction towards the threaded projection (83), starting at a front side (77) of the tool.

18. The tool according to claim 17, **characterized in that** the outer diameter of the threaded projection (83) is smaller than the smallest outer diameter of the shank (75).

19. The tool according to any one of claims 15 to 18, **characterized in that** the assembly section (87) comprises an inner polygon, an outer polygon and/or a recess for at least one pin.

20. The tool according to any one of the preceding claims, **characterized in that** the tool (63) is designed as an exchangeable head.

21. The tool according to any one of the preceding claims, **characterized in that** the tool (63), in addition to the shank (75), comprises a planar surface (81), which serves for the axial orientation.

22. A machine tool comprising
- at least one tool spindle (111), which serves to accommodate a tool,
- at least one tool (63), which serves to process a workpiece (115),
- a workpiece accommodation, which accommodates the workpiece (115), which is to be processed, directly or by means of a pallet, an intermediate bracket or the like,
- wherein the workpiece accommodation and/or the tool spindle (111) are embodied so as to be movable, so that a relative movement between the workpiece (115), which is held by the workpiece accommodation, and the tool (63), which is held by the tool spindle (111), is made possible for processing a workpiece (115),
**characterized by** a tool changing device according to any one of claims 8 to 14, comprising a changing device (1), which, instead of a workpiece (115), can be gripped by the workpiece accommodation for a tool change.

23. The machine tool according to claim 22, **characterized in that** it is embodied as a processing center (107).

24. The machine tool according to claim 23, **characterized in that** the processing center (107) comprises a processing area, preferably a workspace (109), in which the workpiece (115) is processed and into which the changing device (1) can be introduced.

25. The machine tool according to any one of the preceding claims, **characterized in that** the tool (63) is coupled to the tool spindle (111) via a bracket (101).

26. The machine tool according to any one of the preceding claims, **characterized by** a transport device (113) for the workpieces (115), which are to be processed.

27. The machine tool according to claim 26, **characterized in that** the changing device (1) can be accommodated by the transport device (113).

28. The machine tool according to claim 22, **characterized in that** it is embodied as a special processing machine (123).

29. The machine tool according to claim 28, **characterized by** a workspace (125), which can be limited by walls (127, 129).

30. The machine tool according to claim 28 or 29, **characterized by** a number of tool spindles (131), which serve to accommodate tools (133).

31. The machine tool according to any one of the preceding claims 28 to 30, **characterized by** a machine table (135) for accommodating workpieces (137) and a changing device (1), if applicable.

32. The machine tool according to any one of the preceding claims 28 to 31, **characterized in that** the changing device (1) is embodied such that it comprises accommodations for tools, which are arranged complementary relative to tools (133), which are arranged on the walls (127, 129).

## Revendications

1. Procédé de changement d'au moins un outil, comprenant les étapes suivantes :
- un dispositif de changement (1) est saisi et mis à disposition par un logement de pièce d'une machine-outil comme une pièce à usiner,
- le dispositif de changement (1) est déplacé dans la zone de travail de la machine-outil comme une pièce à usiner ou la machine-outil est déplacée vers le dispositif de changement (1) comme vers une pièce à usiner,
- un mouvement relatif entre un outil (63) et le dispositif de changement (1) est entraîné,
- l'outil à remplacer (63) est introduit dans une zone de réception (5, 7) dans le corps de base (3) du dispositif de changement (1) et y est déposé,
- mise à disposition d'un nouvel outil au moyen d'un dispositif de changement (1) et
- saisie du nouvel outil, dans lequel
- seuls des degrés de liberté ou mouvements nécessaires pour l'usinage de pièces à usiner de la machine-outil sont exploités pour la réalisation du changement d'outil, laquelle machine-outil est capable de mettre en engrènement un outil avec une pièce à usiner pour effectuer un usinage.

2. Procédé selon la revendication 1, **caractérisé en ce que** le dispositif de changement (1) reste dans la zone de travail.

3. Procédé selon la revendication 1, **caractérisé en ce que** le dispositif de changement (1) est sorti de la zone de travail.

4. Procédé selon l'une quelconque des revendications 1 à 3, **caractérisé en ce que** divers dispositifs de changement (1) sont utilisés pour recevoir l'outil à remplacer (63) et pour mettre à disposition un autre outil.

5. Procédé selon l'une quelconque des revendications 1 à 4, **caractérisé en ce que** lors d'un changement, plusieurs outils (63) d'une tête multibroche ou d'une machine d'usinage spécial sont remplacés.

6. Procédé selon l'une quelconque des revendications 1 à 5, **caractérisé en ce que** le dispositif de changement (1) est utilisé dans une ligne de transfert (91) et/ou une machine à transfert rotatif.

7. Procédé selon l'une quelconque des revendications 1 à 6, **caractérisé en ce qu'**un logement de la machine-outil serre automatiquement l'outil (63).

8. Dispositif de changement d'outil pour au moins un outil (63) présentant un point de raccordement qui présente un dispositif de changement (1) permettant un changement d'outil automatique selon le procédé selon l'une quelconque des revendications 1 à 7, **caractérisé en ce que** le dispositif de changement (1) peut être utilisé à la place d'une pièce à usiner (97) et présente au moins un dispositif d'engrènement (9, 11) pour la saisie fixe en rotation de l'au moins un outil (63), un raccordement (23) ainsi qu'un dispositif d'encliquetage (31), dans lequel le dispositif d'engagement (9, 11) rotatif autour d'un axe (21) est raccordé au raccordement (23), et dans lequel le dispositif d'encliquetage (31) permet la capacité de rotation libre du dispositif d'engagement (9, 11) autour d'un axe (21) dans un sens et l'empêche dans le sens opposé.

9. Dispositif de changement d'outil selon la revendication 8, **caractérisé en ce que** le dispositif d'engagement (9, 11) présente un polygone externe, un polygone interne et/ou au moins une tige (15, 17).

10. Dispositif de changement d'outil selon l'une quelconque des revendications 8 ou 9, **caractérisé en ce que** le dispositif d'engagement (9, 11) présente un dispositif à ressort (29).

11. Dispositif de changement d'outil selon l'une quelconque des revendications 8 à 10, **caractérisé en ce que** le dispositif d'engagement (9, 11) présente une sécurité.

12. Dispositif de changement d'outil selon l'une quelconque des revendications 8 à 11, **caractérisé en ce que** le raccordement (23) est réglable.

13. Dispositif de changement d'outil selon l'une quelconque des revendications 8 à 12, **caractérisé en ce qu'**au moins un capteur servant à la surveillance fonctionnelle est prévu.

14. Dispositif de changement d'outil selon l'une quelconque des revendications 8 à 13, **caractérisé en ce que** le dispositif de changement (1) présente plusieurs évidements (5, 7) pour outils (63) dont l'agencement correspond à l'agencement d'outils dans une tête multibroche ou à l'agencement d'outils dans une machine d'usinage spécial.

15. Outil pour l'utilisation dans un dispositif de changement d'outil selon l'une quelconque des revendications 8 à 14 et/ou pour l'utilisation lors d'un procédé de changement d'au moins un outil selon l'une quelconque des revendications 1 à 7, comprenant un point de raccordement (73) par le biais duquel l'outil (63) peut être relié à une broche d'une machine-outil, dans lequel le point de raccordement (73) présente un appendice fileté (83) servant à la fixation de l'outil (63) et une aide au centrage (85), **caractérisé en ce que** l'aide au centrage (85) est disposée avant l'appendice fileté (83) vu dans le sens de pénétration de l'appendice fileté (83) dans un filetage interne associé, et qu'une section de montage (87) est prévue pour le raccordement fixe en rotation avec un dispositif d'engagement (9, 11) d'un dispositif de changement (1) d'un dispositif de changement d'outil selon l'une quelconque des revendications 8 à 14.

16. Outil selon la revendication 15, **caractérisé en ce qu'**un appendice dont le diamètre externe est inférieur à celui de l'appendice fileté (83) est prévu en tant qu'aide au centrage (85).

17. Outil selon la revendication 15 ou 16, **caractérisé en ce qu'**un arbre (75) réalisé en tant que cône externe se rétrécissant en partant d'un côté avant (77) de l'outil en direction de l'appendice fileté (83) est prévu sur le côté de l'appendice fileté (83) détourné de l'aide au centrage (85).

18. Outil selon la revendication 17, **caractérisé en ce que** le diamètre externe de l'appendice fileté (83) est inférieur au diamètre externe le plus petit de l'arbre (75).

19. Outil selon l'une quelconque des revendications 15 à 18, **caractérisé en ce que** la section de montage (87) présente un polygone interne, un polygone externe et/ou un évidement pour au moins une tige.

20. Outil selon l'une quelconque des revendications précédentes, **caractérisé en ce que** l'outil (63) est conçu en tant que tête alternative.

21. Outil selon l'une quelconque des revendications précédentes, **caractérisé en ce que** l'outil (63) présente hors de l'arbre (75) une surface plane (81) servant à l'orientation axiale.

22. Machine-outil comprenant
- au moins une broche pour outil (111) servant à la réception d'un outil,
- au moins un outil (63) servant à l'usinage d'une pièce à usiner (115),
- un logement d'outil qui reçoit la pièce à usiner (115) directement ou au moyen d'une palette, d'un dispositif de fixation intermédiaire ou similaire,
- dans laquelle le logement d'outil et/ou la broche pour outil (111) sont réalisés de manière mobile de sorte qu'un mouvement relatif entre la pièce à usiner (115) maintenue par le logement d'outil et l'outil (63) maintenu par la broche pour outil (111) est permis pour l'usinage d'une pièce à usiner (115),
**caractérisée par** un dispositif de changement d'outil selon l'une quelconque des revendications 8 à 14, comprenant un dispositif de changement (1) qui peut être saisi par le logement d'outil pour un changement d'outil à la place d'une pièce à usiner (115).

23. Machine-outil selon la revendication 22, **caractérisée en ce qu'**elle est réalisée en tant que centre d'usinage (107).

24. Machine-outil selon la revendication 23, **caractérisée en ce que** le centre d'usinage (107) présente une zone d'usinage, de préférence un espace de travail (109), dans laquelle la pièce à usiner (115) est usinée et dans laquelle le dispositif de changement (1) peut être introduit.

25. Machine-outil selon l'une quelconque des revendications précédentes, **caractérisée en ce que** l'outil (63) est raccordé à la broche pour outil (111) par le biais d'un porte-outil (101).

26. Machine-outil selon l'une quelconque des revendications précédentes, **caractérisée par** un dispositif de transport (113) pour les pièces à usiner (115).

27. Machine-outil selon la revendication 26, **caractérisée en ce que** le dispositif de changement (1) peut être reçu par le dispositif de transport (113).

28. Machine-outil selon la revendication 22, **caractérisée en ce qu'**elle est réalisée en tant que machine d'usinage spécial (123).

29. Machine-outil selon la revendication 28, **caractérisée par** un espace de travail (125) qui peut être limité par des parois (127, 129).

30. Machine-outil selon la revendication 28 ou 29, **caractérisée par** un certain nombre de broches pour outil (131) qui servent à la réception d'outils (133).

31. Machine-outil selon l'une quelconque des revendications précédentes 28 à 30, **caractérisée par** une table de machine-outil (135) pour la réception de pièces à usiner (137) et éventuellement d'un dispositif de changement (1).

32. Machine-outil selon l'une quelconque des revendications précédentes 28 à 31, **caractérisée en ce que** le dispositif de changement (1) est réalisé de sorte qu'il présente des logements pour outils qui sont disposés de manière complémentaire par rapport à des outils (133) disposés sur les parois (127, 129).
